(19) Europäisches Patentamt
European Patent Office
Office européen des brevets

(11) Veröffentlichungsnummer: 0 106 160
B1

(12) # EUROPÄISCHE PATENTSCHRIFT

(45) Veröffentlichungstag der Patentschrift: **07.01.88**

(51) Int. Cl.⁴: **C 09 J 3/14,** C 08 F 291/00

(21) Anmeldenummer: **83109043.6**

(22) Anmeldetag: **13.09.83**

(54) **Epoxidmodifizierte Montageklebstoffe mit verbessertem Wärmewiderstand.**

(30) Priorität: **13.09.82 US 416835**

(43) Veröffentlichungstag der Anmeldung: **25.04.84 Patentblatt 84/17**

(45) Bekanntmachung des Hinweises auf die Patenterteilung: **07.01.88 Patentblatt 88/1**

(84) Benannte Vertragsstaaten: **AT BE CH IT LI NL SE**

(56) Entgegenhaltungen:
**EP - A - 0 086 469**
**GB - A - 2 084 161**
**US - A - 4 322 509**

(73) Patentinhaber: **LORD CORPORATION, 1635 West 12th Street, Erie Pennsylvania (US)**

(72) Erfinder: **Dawdy, Terrance Harris, 112 Parkway Drive, Erie State of Pennsylvania (US)**

(74) Vertreter: **Dipl.-Phys.Dr. Manitz Dipl.-Ing., Dipl.-Wirtsch. Finsterwald Dipl.-Chem.Dr. Heyn Dipl.-Phys. Rotermund Morgan, B.Sc.(Phys.), Robert-Koch-Strasse 1, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft Montageklebstoffe und insbesondere Montage- oder Bauklebstoffe mit verbesserter Wärmebeständigkeit.

Montageklebstoffe sind wohlbekannte Handelsartikel, die im industriellen Einsatz sehr weitgehend zum Verbinden von Metall- und Kunststoffmaterialien eingesetzt werden. Die Belastbarkeit und die Spannungs-Entlastungseigenschaften von Montageklebstoffen, wie auch ihre Haftfestigkeit, die die Festigkeit der damit verklebten Werkstoffe übertreffen kann, lassen solche Klebstoffe zu attraktiven Alternativen oder Ersatzmöglichkeiten für mechanische Verfahren wie Nieten oder Punktschweissen beim Verbinden von Konstruktionsmaterialien werden, insbesondere dann, wenn es Vorteile bringt, Belastungsspannungen über grössere Flächen zu verteilen, statt diese Spannungen an wenigen Stellen zu konzentrieren. Ihre Verwendung kann kostspielige Endbearbeitungsvorgänge, die bei mechanischen Verbindungsverfahren nötig sind, reduzieren oder beseitigen, es kann ein ansprechenderes Aussehen erreicht werden, und es kann zumindestens die Möglichkeit der Korrosion von Aufbauten, die ein oder mehrere Metallbestandteile enthalten, herabgesetzt werden. Zusätzlich können sie zum Verkleben oder festen Verbinden einer Vielzahl von Metallen ohne ausgiebige Oberflächenvorbehandlung verwendet werden. Beispielsweise sind in den US-PS 4 223 115 und 3 890 407 Montageklebstoffe auf Acrylbasis beschrieben, die sich als wirksame Klebmaterialien für ölige Metalloberflächen bewährt haben.

In der EP-A-0 086 469 werden Montageklebstoffe zum Verkleben von Metallen und Kunststoffen beschrieben. Die Klebstoffe umfassen eine Lösung oder Dispersion eines polymeren Materials, eines mit einem solchen polymeren Material copolymerisierbaren Monomeren und phosphorhaltige Verbindungen. Bei der Aufzählung der phosphorhaltigen Verbindungen wird gamma-Glycidoxypropylphosphonsäure genannt, eine Verbindung, die sowohl phosphorhaltig ist als auch eine Epoxidverbindung ist, jedoch keine olefinisch ungesättigte Gruppe aufweist.

Aus der US-A-4 322 509 und GB-A-2 084 161 sind anaerobe Klebstoffe bekannt, die ein anaerob polymerisierbares Material, eine phosphorhaltige Verbindung mit einer olefinisch ungesättigten Gruppe und P-OH-Gruppen sowie ein tertiäres Amin enthalten. Als geeignete anaerob polymerisierbare Materialien werden jeweils Reaktionsprodukte von Acrylsäure und substituierter Acrylsäure mit Epoxidverbindungen angegeben. Die Epoxidverbindungen werden jedoch nicht in einer vom P-OH-Gehalt der phosphorhaltigen Verbindung abhängigen Menge eingesetzt.

Trotz der vorteilhaften Eigenschaften sind derartige Acrylmontageklebstoffe nicht ohne Nachteile. Beispielsweise ist ein sich ständig erweiterndes Anwendungsgebiet für solche Klebstoffe das Verkleben von Leichtmetallen und Kunststoffmaterialien in der Transportindustrie bei der Herstellung von Fahrzeugkarosserien und Komponententeilen. Bei solchen Anwendungen wird das fertige Erzeugnis üblicherweise nach dem Aushärten des Klebstoffes mit einem Anstrich versehen, nachdem der Klebstoff vorzugsweise bei Umgebungstemperaturen ausgehärtet wurde, und die lackierten oder angestrichenen Oberflächen werden einem Einbrennzyklus bei Temperaturen über 100 °C unterworfen, um das Aushärten und die Haftfestigkeit der Lack- oder Anstrichschicht zu verbessern. Obwohl Acrylklebstoffe ausgezeichnete Hafteigenschaften bei Umgebungstemperaturen besitzen, hat sich gezeigt, dass mit derartigen Klebern verklebte Aufbauten dann, wenn sie erhöhten Temperaturen des Einbrennzyklus unterworfen wurden, einen beträchtlichen Verlust der Haftfestigkeit erleiden, wenn sie bei Temperaturen getestet werden, die den bei dem Einbrennzyklus verwendeten Temperaturen entsprechen, und dass sie eine Verminderung der Anfangs-Haftwerte zeigen, wenn sie bei Umgebungstemperatur nach Behandlung bei derart erhöhten Temperaturen getestet werden. Ganz offensichtlich können Verbesserungen des Verhaltens bei erhöhten Temperaturen ohne sonstige Abstriche von der Klebeeigenschaft die Verwendung von Acryl-Montageklebstoffen beträchtlich verbessern.

Damit ergibt sich als Aufgabe der Erfindung die Bereitstellung von solchen Montageklebstoffen mit erhöhter Temperaturbeständigkeit.

Bei der Ausarbeitung der Erfindung hat sich herausgestellt, dass die Wärmebeständigkeit, d.h. die Fähigkeit, thermischem Abbau zu widerstehen, die sich in der Erholung der Anfangswerte nach Behandlung bei erhöhten Temperaturen zeigt, von Acrylmontageklebern beträchtlich dadurch verbessern lässt, dass in solche Klebemassen mindestens ein Epoxidharz und mindestens eine phosphorhaltige Verbindung mit mindestens einer olefinisch ungesättigten Gruppe und mindestens einer P-OH-Gruppe aufgenommen wird, und dass das Epoxidharz in einer Menge von 1 bis 5 Epoxidäquivalenten je P-OH-Äquivalent vorliegt. Es wird kein katalytischer Härter für das Epoxidharz verwendet, um die Epoxid-Phosphatesterbildung ohne volle Reaktion aller Epoxidgruppen zu fördern.

Erfindungsgemäss dargestellte Klebermassen ergeben erhöhte Anfangsklebefestigkeit, bessere Erholung der Anfangswerte nach Behandlung bei erhöhter Temperatur (erhöhte Wärmebeständigkeit) und erhöhte Wärmefestigkeit, d.h. Haftfestigkeit bei erhöhten Temperaturen, als sich durch die gleichen Kleber ergibt, die sowohl kein Epoxidharz als auch keine phosphorhaltige Verbindung mit mindestens einer olefinisch ungesättigten Gruppe und mindestens einer P-OH-Gruppe enthalten, und eine verbesserte Wärmefestigkeit als die gleichen Kleber, bei denen das genannte Epoxid:P-OH-Verhältnis nicht eingehalten ist.

Erfindungsgemäss wurden acrylische Montagekleber mit verbesserten Eigenschaften bei erhöhten Temperaturen entwickelt. Klebstoffzusammensetzungen der erfindungsgemässen Art enthalten in Kombination:

A. mindestens ein polymerisierbares polymeres Material, ausgewählt aus folgender Gruppe:

(1) mindestens ein olefinisch ungesättigtes Urethanreaktionsprodukt von mindestens einem Vorpolymer mit Isocyanatfunktionen und mindestens einem Monomeren mit Hydroxylfunktionen, das mindestens eine polymerisierbare olefinisch ungesättigte Einheit aufweist, wobei das Reaktionsprodukt durch die Anwesenheit von mindestens zwei olefinisch ungesättigten Einheiten und die praktische Abwesenheit von freien Isocyanatgruppen ausgezeichnet ist,

(2) mindestens ein elastomeres polymeres Material auf Butadienbasis, ausgewählt aus der Gruppe:
(a) Homopolymere von Butadien,
(b) Copolymere von Butadien und mindestens einem damit copolymerisierbaren Monomeren, ausgewählt aus der Gruppe Styrol, Acrylnitril, Methacrylnitril und deren Gemischen,
(c) modifiziertes elastomeres Material, ausgewählt aus der Gruppe der Homo- und Copolymeren von Butadien, wie vorher beschrieben, wobei diese Homo- und Copolymere modifiziert wurden durch Copolymerisation von Spurenmengen von bis zu 5 Gew.-%, bezogen auf das Gewicht des modifizierten elastomeren Materials, wenigstens eines funktionellen Monomeren, und
(d) deren Mischungen,

(3) mindestens ein Polymer-in-Monomer-Sirup, bestehend im wesentlichen aus:
(a) 2 bis 90 Gew.-% mindestens eines polymerisierbaren Additionspolymer,
(b) 10 bis 98 Gew.-% mindestens einer polymerisierbaren olefinisch ungesättigten monomeren Verbindung mit mindestens einer $-\overset{|}{C}=\overset{|}{C}-$ Gruppe, und
(c) 0 bis 30 Gew.-% eines die Gruppe $(CH_2CCl=CHCH_2)_n$ enthaltenden Polymers, wobei n eine ganze Zahl ist, wobei (a) und (b) als ein partielles Polymerisationsprodukt von (b) oder von (b) in Anwesenheit von (c) vorhanden sind, das Gemisch von (a) und (b) oder von (a), (b) und (c) ein Sirup von in unpolymerisiertem Monomer gelöstem oder dispergiertem Polymer ist, in welchem Sirup die Menge des von (b) abgeleiteten (a) im Bereich von 2 bis 90 Gew.-%, bezogen auf das Gesamtgewicht von (a), (b) und (c), liegt,

(4) mindestens ein polymerisierbares polymeres Material, ausgewählt aus der Gruppe Polyvinylalkylether, Styrolacrylnitrilharz, ungesättigtes Polyesterharz und deren Gemischen, wobei der Alkylanteil des Polyvinylalkylethers 1 bis 8 Kohlenstoffatome enthält,

(5) mindestens ein Homopolymer oder Copolymer von mindestens einem Monomer, ausgewählt aus der Gruppe Styrol und Alkyl- oder Hydroxyalkylestern von Acrylsäure oder Methacrylsäure, wobei der Ester 1 bis 18 Kohlenstoffatome in dem Alkylanteil besitzt, und

(6) Gemische solcher Polymere,

B. mindestens ein polymerisierbares Material, ausgewählt aus der Gruppe Styrol und Acrylmonomer oder substituiertes Acrylmonomer und deren Gemische, wobei die Menge der polymerisierbaren Monomeren zusätzlich zu dem in (A) (3) vorhandenen Monomer anwesend ist, sofern die Komponente (A) (3) in der Klebstoffzusammensetzung enthalten ist,

C. mindestens eine phosphorhaltige Verbindung mit mindestens einer olefinisch ungesättigten Gruppe und mindestens einer P-OH-Gruppe,

D. ein bei Zimmertemperatur aktives Redoxkoppelkatalysatorsystem, dadurch gekennzeichnet, dass die Klebstoffzusammensetzung

E. mindestens eine Epoxidverbindung enthält, die in einer Menge von 1 bis 5 Epoxidäquivalenten je P-OH-Äquivalent vorliegt.

Insbesondere enthalten die bei Zimmertemperatur härtbaren Acrylmontagekleber der erfindungsgemässen Art:

A. mindestens ein polymerisierbares polymeres Material, ausgewählt aus folgender Gruppe:

(1) mindestens ein olefinisch ungesättigtes Urethanreaktionsprodukt von mindestens einem Vorpolymer mit Isocyanatfunktionen und mindestens einem Monomeren mit Hydroxylfunktionen, das mindestens eine polymerisierbare olefinisch ungesättigte Einheit aufweist, wobei das Reaktionsprodukt durch die Anwesenheit von mindestens zwei olefinisch ungesättigten Einheiten und die praktische Abwesenheit von freien Isocyanatgruppen ausgezeichnet ist,

(2) mindestens ein elastomeres polymeres Material auf Butadienbasis, ausgewählt aus der Gruppe:
(a) Homopolymere von Butadien,
(b) Copolymere von Butadien und mindestens einem damit copolymerisierbaren Monomer, ausgewählt aus der Gruppe Styrol, Acrylnitril, Methacrylnitril und deren Gemischen,
(c) modifiziertes elastomeres Material, ausgewählt aus der Gruppe der Homo- und Copolymeren von Butadien, wie vorher beschrieben, wobei diese Homo- und Copolymere modifiziert wurden durch Copolymerisation von Spurenmengen von bis zu 5 Gew.-%, bezogen auf das Gewicht des modifizierten elastomeren Materials, wenigstens eines funktionellen Monomeren, und
(d) deren Mischungen,

(3) mindestens ein Polymer-in-Monomer-Sirup, bestehend im wesentlichen aus:
(a) 2 bis 90 Gew.-% mindestens eines polymerisierbaren Additionspolymeren,
(b) 10 bis 98 Gew.-% mindestens einer polymerisierbaren olefinisch ungesättigten monomeren Verbindung mit mindestens einer $-\overset{|}{C}=\overset{|}{C}-$ Gruppe, und
(c) 0 bis 30 Gew.-% eines die Gruppe $(CH_2CCl=CHCH_2)_n$ enthaltenden Polymers, wobei n eine ganze Zahl ist, wobei (a) und (b) als partielles Polymerisationsprodukt von (b) oder von (b) in Anwesenheit von (c) vorhanden sind, das Gemisch von (a) und (b) oder von (a), (b) und (c) ein

Sirup von in unpolymerisiertem Monomer gelöstem oder dispergiertem Polymer ist, in welchem Sirup die Menge des von (b) abgeleiteten (a) im Bereich von 2 bis 90 Gew.-%, bezogen auf das Gesamtgewicht von (a), (b) und (c), liegt.

(4) mindestens ein polymerisierbares polymeres Material, ausgewählt aus der Gruppe Polyvinylalkylether, Styrolacrylnitrilharz, ungesättigtes Polyesterharz und deren Gemischen, wobei der Alkylanteil des Polyvinylalkylethers 1 bis 8 Kohlenstoffatome enthält,

(5) mindestens ein Homopolymer oder Copolymer von mindestens einem Monomeren, ausgewählt aus der Gruppe Styrol und Alkyl- oder Hydroxyalkylestern von Acrylsäure oder Methacrylsäure, wobei der Ester 1 bis 18 Kohlenstoffatome in dem Alkylanteil besitzt, und

(6) Gemische solcher Polymere,

B. mindestens ein polymerisierbares Material aus der Gruppe Styrol, Acrylmonomer oder substituiertes Acrylmonomer und deren Gemische, wobei die Menge des Monomeren zusätzlich zu der Menge eines Monomeren in (A) (3) vorhanden ist, sofern die Komponente (A) (3) in der Klebstoffzusammensetzung enthalten ist,

C. mindestens eine phosphorhaltige Verbindung mit mindestens einer olefinisch ungesättigten Gruppe und mindestens einer P-OH-Gruppe,

D. mindestens eine Epoxidverbindung,

E. mindestens ein Reduktionsmittel eines bei Zimmertemperatur aktiven Redoxkoppelkatalysatorsystems und

F. einen Abbindebeschleuniger, der mindestens ein Oxidationsmittel eines bei Zimmertemperatur aktiven Redoxkoppelkatalysatorsystems enthält, wobei das Oxidationsmittel bei Zimmertemperatur mit dem Reduktionsmittel unter Bildung von freien Radikalen reaktiv ist, welche zur Initiierung der Polymerisation des additionspolymerisierbaren polymeren Materials und des polymerisierbaren olefinisch ungesättigten Monomeren, Polymeren von einem oder mehrerer solcher Monomerer oder des partiell polymerisierten Sirups von einem oder mehrerer solcher Monomerer wirksam sind, wobei die Menge des olefinisch ungesättigten Urethanreaktionsproduktes im Bereich von 10 bis 90 Gew.-%, vorzugsweise 13 bis 83 Gew.-%, bezogen auf das Gesamtgewicht der polymerisierbaren Materialien und des Reduktionsmittels, liegt, die Menge des elastomeren polymeren Materials auf Butadienbasis im Bereich von 1 bis 30 Gew.-%, vorzugsweise 7 bis 27 Gew.-%, bezogen auf das Gesamtgewicht der polymerisierbaren Materialien und des Reduktionsmittels, liegt, die Menge des Polymer-in-Monomer-Sirups im Bereich von 2 bis 60 Gew.-%, vorzugsweise 5 bis 60 Gew.-%, bezogen auf das Gesamtgewicht der polymerisierbaren Materialien und des Reduktionsmittels, liegt, die Menge des Polyvinylalkylethers, des Styrolacrylnitrilharzes und des ungesättigten Polyesterharzes im Bereich von 5 bis 75 Gew.-%, vorzugsweise 15 bis 75 Gew.-%, bezogen auf das Gesamtgewicht der polymerisierbaren Materialien und des Reduktionsmittels, liegt, die Menge der Homopolymeren oder Copolymeren von mindestens einem Monomeren aus der Gruppe Styrol und Estern von Acryl- oder substituierter Acrylsäure im Bereich von 2 bis 60 Gew.-%, bevorzugt 5 bis 60 Gew.-%, bezogen auf das Gesamtgewicht der polymerisierbaren Materialien und des Reduktionsmittels, liegt, die Menge des Styrols und des Acryl- oder substituierten Acrylmonomers im Bereich von 10 bis 90 Gew.-%, bevorzugt 17 bis 87 Gew.-%, bezogen auf das Gesamtgewicht der polymerisierbaren Materialien und des Reduktionsmittels, liegt, die Menge der phosphorhaltigen Verbindung im Bereich von 0,1 bis 20 Gew.-%, bevorzugt 2 bis 10 Gew.-%, bezogen auf das Gesamtgewicht der polymerisierbaren Materialien und des Reduktionsmittels, liegt, die Epoxidverbindung in einer Menge von 1 bis 5, bevorzugt 1,75 bis 4,25 Epoxidäquivalenten pro P-OH-Äquivalent vorhanden ist, das Reduktionsmittel in einer Menge von 0,05 bis 10 Gew.-%, bevorzugt 0,1 bis 6 Gew.-%, bezogen auf das Gesamtgewicht der polymerisierbaren Materialien, vorhanden ist, und die Menge des Oxidationsmittels im Bereich von 0,5 bis 30 Gew.-%, bevorzugt 1 bis 10 Gew.-%, bezogen auf das Gesamtgewicht des Abbindebeschleunigers, liegt.

Das erfindungsgemässe Klebersystem kann wahlweise bis zu 50, vorzugsweise nicht mehr als 25 Gew.-%, bezogen auf das Gesamtgewicht der polymerisierbaren Materialien und des Reduktionsmittels, von mindestens einem polymerisierbaren olefinisch ungesättigten nichtacrylischen Monomeren enthalten, bis zu 60, bevorzugt nicht mehr als 30 Gew.-%, bezogen auf das Gesamtgewicht der polymerisierbaren Materialien und des Reduktionsmittels, von mindestens einem polymerisierbaren polymeren Material mit einer Eigenviskosität im Bereich von 0,1 bis 1,3, wobei dieses polymere Material aus der Polymerisation von mindestens einem Styrol-Monomeren, Acrylmonomeren, substituierten Acrylmonomeren, olefinisch ungesättigten nichtacrylischen Monomeren oder deren Gemischen erhalten wird, bis zu 40, bevorzugt nicht mehr als 30 Gew.-%, bezogen auf das Gesamtgewicht der polymerisierbaren Materialien und des Reduktionsmittels, von mindestens einem additions-polymerisierbaren elastomeren Material mit einer Einfriertemperatur unterhalb 5 °C, bis zu 5 Gew.-% von mindestens einem ungesättigten Dicarboxylsäureester, bis zu 10 Gew.-% von mindestens einem ungesättigten Polyesterharz, bis zu 20 Gew.-% von mindestens einer ungesättigten Carboxylsäure mit einer oder mehr, bevorzugt einer, Carboxylsäuregruppe(n) und bis zu 1 Gew.-% mindestens einer Wachssubstanz, ausgewählt aus der Gruppe Paraffinwachs, Montanwachs, Bienenwachs, Zeresinwachs und Spermazetwachs.

Zur Verwendung bei der vorliegenden Erfindung geeignete Polymer-in-Monomer-Sirupe sind sowohl nach ihrer Zusammensetzung wie nach ihrer Darstellung dem Fachmann wohlbekannt. Dafür repräsentative Sirupe, einschliesslich Vorläufer-Flüssigmonomer-Verbindungen mit mindestens einer olefinisch ungesättigten Gruppe und ihre Darstellung sind in den US-PS 3 333 025,

3 725 504 und 3 873 640 beschrieben. Kurz zusammengefasst werden derartige Sirupe normalerweise dadurch dargestellt, dass das im wesentlichen aus mindestens einer polymerisierbaren flüssigen olefinisch ungesättigten Verbindung und falls verwendet, ein die Gruppe $(CH_2-CCl=CH-CH_2)_n$ enthaltendem Polymeren bestehende Ausgangsgemisch für kurze Zeit unter Vakuum bei ca. 40 °C entgast wird und dann in einer inerten Gasatmosphäre das Gemisch auf etwa 75 °C aufgeheizt wird. Ein Katalysator, z.B. ein ein freies Radikal erzeugender Katalysator wie Benzoyl-Peroxid oder Azodiisobutyrilsäure-Dinitril wird dann vorzugsweise in Form einer Lösung hinzugefügt. Die Menge des hinzugefügten Katalysators wird so ausgewählt, dass sie vollständig verbraucht ist, wenn die erwünschte Viskosität erreicht wird. Nach Vollendung der Reaktion wird der Polymer-in-Monomer-Sirup abgekühlt. Vorzugsweise besitzen diese Sirupe Viskositäten im Bereich von etwa 500 bis etwa 1 000 000 mPa · s bei 20 °C.

Für die Verwendung bei den erfindungsgemässen Kleberverbindungen geeignete monomere flüssige olefinisch ungesättigte Verbindungen zur Ausbildung der Polymer-in-Monomer-Sirupe und als zusätzliche polymerisierbare Materialien werden durch die Anwesenheit von mindestens einer $-\overset{|}{C}=\overset{|}{C}-$ Gruppe charakterisiert. Die olefinisch ungesättigte Gruppe ist vorzugsweise eine Vinylgruppe, die bevorzugt endständig ist, wobei gegenwärtig Acrylmonomere und substituierte Acrylmonomere bevorzugt werden. Repräsentative olefinisch ungesättigte Monomere schliessen, ohne Begrenzung, Methylmethacrylat, Butylmethacrylat, Ethylacrylat, Diethylenglykoldimethacrylat, Methacrylsäure, Acrylsäure, Acrylnitril, Methacrylnitril, Styrol, Vinylstyrol, Vinylacetat, Chlorostyrol, Glycidylmethacrylat, Itakonsäure, Acrylamid, Methacrylamid, Vinylidenchlorid, 2,3-Dichlor-1,3-butadien, 2-Chlor-1,3-butadien, Methylstyrol und n-Butylstyrol ein.

Die Gruppe $(CH_2-CCl=CH-CH_2)_n$, wobei n eine gerade Zahl ist, enthaltende Polymere sind dem Fachmann unter dem Namen Neopren wohlbekannt, das durch die Polymerisation von 2-Chlor-1,3-butadien erzeugt wird. Eine weitere Erklärung erscheint überflüssig.

Die zur Verwendung bei der Ausführung der Erfindung geeigneten Vorpolymere mit Isocyanatfunktionen sind ebenfalls bekannt. Typischerweise sind diese Vorpolymere Addukte oder Kondensationsprodukte von Polyisocyanatverbindungen mit mindestens zwei freien Isocyanatgruppen und monomeren oder polymeren Polyolen mit mindestens zwei Hydroxylgruppen, einschliesslich Gemischen von solchen Polyolen. Die Reaktion zwischen dem Polyisocyanat und den Polyolen wird mit einer Überschussmenge von Polyisocyanat ausgeführt, um sicherzustellen, dass das Reaktionsprodukt mindestens zwei freie nichtreagierte Isocyanatgruppen aufweist.

Bei der Darstellung der bei der vorliegenden Erfindung benutzten Vorpolymere mit Isocyanatfunktionen brauchbare Polyole besitzen vorzugsweise ein durchschnittliches Molekulargewicht von etwa 300 bis etwa 3000. Zu den geeigneten Polyolen gehören Polyalkylenglykole wie Polyethylenglykole, Polyetherpolyole wie die Verbindungen, die durch Additionspolymerisation von Ethylenoxid und einem Polyol wie Trimethylolpropan in einem Verhältnis zur Erzeugung unreagierter Hydroxylgruppen in dem Produkt hergestellt werden, organische hydroxylierte Elastomere, die eine Einfriertemperatur (Glasübergangstemperatur zweiter Ordnung) unter 5 °C besitzen wie Poly(butadienstyrol)-polyole und Poly(butadien)-polyole, Polyesterpolyole, wie sie durch Polymerisation von Polyolen, z.B. Diethylenglykol, Trimethylolpropan oder 1,4-Butandiol mit Polycarbonsäuren wie Phthalsäure, Terephthalsäure, Adipinsäure, Maleinsäure oder Bernsteinsäure in einem Verhältnis zur Bereitstellung unreagierter Hydroxylgruppen in dem fertigen Produkt hergestellt werden, Glyceridester von hydroxylierten Fettsäuren wie Rizinusöl, Glycerinmonoricinoleat, geblasenes Leinöl und geblasenes Sojaöl sowie Polyesterpolyole, wie sie beispielsweise durch Polymerisation eines Lactons wie ε-Caprolacton hergestellt werden.

Polyisocyanate, die mit Polyolen zur Bildung von Vorpolymeren mit Isocyanatfunktionen zur Verwendung in der vorliegenden Erfindung umgesetzt werden können, können beliebige Monomere, d.h. nicht-polymere Isocyanatverbindungen mit wenigstens zwei freien Isocyanatgruppen sein, einschliesslich aliphatischen, cycloaliphatischen und aromatischen Verbindungen. Typische Vertreter von Polyisocyanaten umfassen, ohne Beschränkung hierauf, 2,4-Tolylendiisocyanat, 2,6-Tolylendiisocyanat, 4,4′-Diphenylmethandiisocyanat, m- und p-Phenyldiisocyanat, Polymethylenpoly(phenylisocyanat), Hexamethylendiisocyanat, 4,4′-Methylen-bis-(cyclohexylisocyanat), Isophorondiisocyanat und andere aliphatische, cycloaliphatische und aromatische Polyisocyanate, einschliesslich Gemischen solcher Polyisocyanate. Gegenwärtig werden cycloaliphatische und aromatische Polyisocyanate bevorzugt.

Verbindungen mit Hydroxylfunktionen, die zur Einführung olefinisch ungesättigter Einheiten in die Vorpolymere mit Isocyanatfunktionen eingesetzt werden können, enthalten – ohne Beschränkung hierauf – Hydroxyethylacrylat, Hydroxyethylmethacrylat, Allylalkohol und Vinylalkohol.

Die elastomeren polymeren Materialien auf Butadienbasis, die zur Ausführung dieser Erfindung geeignet sind, sind ebenfalls an sich bekannt und können beliebige von 1,3-Butadien oder seinen halogenierten Analogen abgeleitete Elastomere mit einer Einfriertemperatur unter Zimmertemperatur und vorzugsweise nicht über 5 °C sein. Geeignete Elastomere enthalten Butadienhomopolymere, Copolymere von Butadien mit Styrol, Acrylnitril und Methacrylnitril und solche Homopolymere und Copolymere, welche durch Copolymerisation von Spurenmengen (0,05 bis 5%) eines funktionellen Comonomeren wie Acrylsäure, Methacrylsäure, Maleinsäureanhydrid, Fumarsäure, Styrol und Methylmethacrylat modifiziert wurden.

Zur Verwendung bei den beschriebenen Kleberzusammensetzungen geeignete Polyvinylalkylether sind ebenfalls dem Fachmann an sich bekannt. Diese Ether enthalten vorzugsweise 1 bis 8, besonders bevorzugt 1 bis 4 Kohlenstoffatome in dem Alkylanteil des Ethers. Es sind gleicherweise Styrol-Acrylnitrilpolymere bekannt, die zur Verwendung bei der Erfindung geeignet sind.

Elastomere polymere Materialien mit einer Einfriertemperatur unterhalb 5 °C können zur Modifizierung der Zimmertemperatur-Flexibilität der Klebstoffbindung wirksam eingesetzt werden. Besonders bevorzugte derartige Elastomere sind Polychloroprenkautschuk, Polybutadienkautschuk, Butadien-Copolymer-Kautschuke wie Acrylnitril-Butadien-, carboxylierte Acrylnitrilbutadien- und Styrol-Butadien-Kautschuke, Polyacrylatkautschuke wie Poly-(ethylacrylat)- und Poly-(ethylacrylat-halogenierte-Vinyletheracrylsäure)-kautschuke und Ethylencopolymere wie Ethylenvinylacetatkautschuke. Andere elastomere Polymere mit einer Einfriertemperatur von etwa 5 °C können ebenfalls verwendet werden, da ausser der niedrigen Einfriertemperatur keine andere Beschränkungen hinsichtlich der Identität der Elastomere gegeben sind mit Ausnahme der spezifischen Erfordernisse der speziellen formulierten Klebstoffzusammensetzungen, wie geeignetes Molekulargewicht, Viskositätseigenschaften und Verträglichkeit mit den anderen Bestandteilen des Klebstoffes.

Derartige elastomere polymere Materialien erweisen sich als besonders günstig bei der Aufnahme in Acrylklebern, die mindestens ein olefinisch ungesättigtes Polyurethan enthalten.

Nichtacrylische Monomere, die bei den beschriebenen Klebersystemen Verwendung finden können, schliessen Styrol, Chlorstyrol, Vinylstyrol und Vinylacetat ein.

Zur Verwendung bei der vorliegenden Erfindung geeignete polymere Materialien mit einer Eigenviskosität (grundmolare Viskositätszahl) von 0,1 bis etwa 1,3 können durch die Polymerisierung von einem oder mehreren Acrylmonomeren oder nichtacrylischen Monomeren einschliesslich deren Gemischen erhalten werden. Typische Ausführungsbeispiele von polymeren Materialien enthalten Poly(methylmethacrylat/n-butylacrylat/ethylacrylat) (90/5/5%); Poly(n-butylmethacrylat/isobutylmethacrylat) (50/50%); Poly(n-butylmethacrylat) und Poly-(ethylmethacrylat). Vorzugsweise liegt die Viskosität etwa in der Mitte des angegebenen Bereiches.

Die Verwendung von polymeren Materialien mit derartigen Eigenviskositäten erweist sich als besonders vorteilhaft bei Acrylklebern, welche Homopolymere und Copolymere von 1,3-Butadien enthalten.

Die zur Verwendung bei der Erfindung geeigneten Epoxidverbindungen können irgendwelche monomere oder polymere Verbindungen oder Gemische von Verbindungen mit einer 1,2-Epoxidäquivalenz grösser als eins sein, d.h. solche, bei denen die durchschnittliche Anzahl von 1,2-Epoxidgruppen pro Molekül grösser als 1 ist; dabei sind polymere Epoxidverbindungen mit einem Molekulargewicht in dem Bereich von 400 bis 10 000 gegenwärtig bevorzugt. Epoxidverbindungen sind dem Fachmann an sich bekannt, siehe beispielsweise die US-PS 2 467 171, 2 615 007, 2 716 123, 3 030 336 und 3 053 855. Brauchbare Epoxidverbindungen schliessen die Polyglycidylether von polyhydrierten Alkoholen wie Ethylenglykol, Triethylenglykol, 1,2-Propylenglykol, 1,5-Pentandiol, 1,2,6-Hexantriol, Glycerin und 2,2-bis-(4-hydroxy-cyclohexyl)-propan, die Polyglycidylester von aliphatischen oder aromatischen Polycarboxylsäuren wie Oxalsäure, Bernsteinsäure, Glutarsäure, Terephthalsäure, 2,6-Naphthalendicarboxylsäure und dimerisierte Linolensäure und die Polyglycidylether von Polyphenolen, beispielsweise Bisphenol A, 1,1-bis(A-hydroxyphenyl)ethan, 1,1-bis(Hydroxyphenyl)-isobutan, 2,2-bis(4-Hydroxy-t-butylphenyl)-propan, 1,5-Dihydroxynaphthalen und Novolak-Harze ein, wobei cycloaliphatische Polyglycidylverbindungen gegenwärtig bevorzugt sind.

Zur Verwendung bei den erfindungsgemässen Klebstoffzusammensetzungen geeignete phosphorhaltige Verbindungen werden aus der Gruppe ausgewählt, die aus Derivaten von Phosphinsäure, phosphoriger Säure und Metaphosphorsäure mit mindestens einer -POH-Gruppe und mindestens einem organischen Anteil ausgewählt werden und durch die Anwesenheit mindestens einer olefinisch ungesättigten Gruppe, die vorzugsweise endständig ist, charakterisiert sind. Insbesondere besitzen solche olefinisch unsaturierte organische Phosphorverbindungen die charakteristische Formel

I. 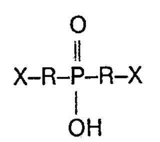 ,

wobei jede Gruppe R die gleiche oder eine unterschiedliche sein kann und unabhängig voneinander ein zweiwertiges organisches, direkt an das Phosphoratom über eine Kohlenstoff-Phosphor-Bindung gebundenes Radikal ist, wobei diese zweiwertigen Radikale aus der Gruppe ausgewählt sind, die aus zweiwertigen unsubstituierten organischen Radikalen und zweiwertigen organischen Radikalen mit mindestens einem Substituenten aus der Gruppe Halogen, Hydroxyl, Amino, Alkylrest mit eins bis acht, vorzugsweise 1 bis vier Kohlenstoffatomen und Arylrest mit wenigstens einem Anteil, der mindestens einen Aromatenring enthält, besteht, mindestens ein X die Gruppe $CH_2 = C<$ ist und das andere X eine funktionelle Gruppe in Form von Wasserstoff, Hydroxyl, Amino, Mercapto, Halogen oder $CH_2 = C<$ ist, oder

II. 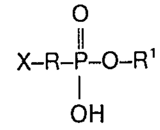

wobei R wie vorher definiert ist, $R^1$ Wasserstoff oder $-R^2-X$ ist, worin $R^2$ ein divalentes organisches, direkt an das Sauerstoffradikal über eine Kohlenstoff-Sauerstoffbindung gebundenes zweiwertiges (divalentes) organisches Radikal ist, welches aus der Gruppe ausgewählt ist, die aus divalenten unsubstituierten organischen Radikalen und divalenten organischen Radikalen mit mindestens einem Substituenten aus der Gruppe Halogen, Hydroxyl, Amino, Alkylrest mit eins bis acht Kohlenstoffatomen und Arylrest mit mindestens einem Anteil, der mindestens einen Aromatenring enthält, besteht, und worin X wie vorher definiert ist, mit der Massgabe, dass mindestens ein X-Anteil $CH_2 = C<$ sein muss, oder

III. 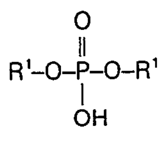 ,

wobei $R^1$ die vorher angegebene Bedeutung besitzt, mit der Massgabe, dass mindestens eine $R^1$-Gruppe mindestens einen $CH_2 = C<$-Anteil besitzt.

Eine gegenwärtig bevorzugte Gruppe von phosphorhaltigen Verbindungen besitzt die Formel

IV. 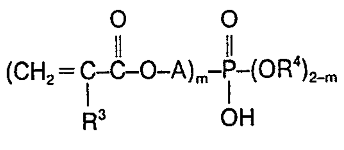 ,

wobei $R^3$ Wasserstoff, Halogen, eine Alkylgruppe mit eins bis acht, vorzugsweise eins bis vier, Kohlenstoffatomen oder $CH_2 = CH-$ bedeutet, $R^4$ Wasserstoff, eine Alkylgruppe mit eins bis acht, vorzugsweise eins bis vier, Kohlenstoffatomen oder eine Halogenalkylgruppe mit eins bis acht, bevorzugt eins bis vier, Kohlenstoffatomen ist, A $-R^5O-$ oder $(R^6O)_n$ ist, worin $R^5$ eine aliphatische oder cycloaliphatische Alkylengruppe mit eins bis neun, vorzugsweise zwei bis sechs, Kohlenstoffatomen und $R^6$ eine Alkylengruppe mit eins bis sieben, vorzugsweise 2 bis 4, Kohlenstoffatomen ist, n eine ganze Zahl von zwei bis zehn und m = eins oder zwei, vorzugsweise eins ist.

Bei den verschiedenen Formeln I bis IV können die zweiwertigen organischen Radikale R und $R^2$ eine Verbindungsstruktur besitzen, d.h. das Radikal kann wenigstens eine oder eine Reihe von mindestens zwei unsubstituierten oder substituierten Kohlenwasserstoffgruppe (m) aufweisen, welche die Reihen –O–, –S–, –COO–, –NH–, –NHCOO– enthalten oder durch diese Gruppen voneinander getrennt sind, und die Gruppierung $(R^7O)_p$, worin $R^7$ eine von 2 bis 7, vorzugsweise von 2 bis 4 Kohlenstoffatome enthaltende Alkylengruppe ist und p eine ganze Zahl von 2 bis 10 bedeutet. Vorzugsweise ist das divalente Radikal ein Alkylenradikal mit einer geraden Kette oder einem Ring von 1 bis 22, vorzugsweise 1 bis 9, Kohlenstoffatomen in irgendeiner sich nicht wiederholenden Einheit. Es ist darauf hinzuweisen, dass zweiwertige Radikale mit einer Verbindungsstruktur zwei oder mehr solcher geraden Ketten oder Ringe besitzen. Die zweiwertigen Radikale können gesättigt oder ungesättigt, aliphatisch, cycloaliphatisch oder aromatisch sein, und sie können bei Verbindungsstrukturen Mischungen daraus einschliessen und besitzen allgemein von 1 bis etwa 22 Kohlenstoffatome in jeder Kette oder jedem Ring von Kohlenstoffatomen.

Bei den verschiedenen Formeln I–III schliessen repräsentative X–R– und $X-R^2$-Radikale – ohne Begrenzung hierauf – niedere Alkenyl-, Cyclohexenyl-, Hydroxy-niederalkenyl, Halogen-niederalkenyl-, Carboxy-niederalkenyl-, Niederalkyl-, Amino-niederalkyl-, Hydroxy-niederalkyl-, Mercapto-niederalkyl-, Alkoxy-niederalkyl-, Halogenniederalkyl-, Diphosphonmethylamino-niederalkyl-, Phenylhydroxy-phosphonmethyl-, Aminophenylhydroxyphosphonmethyl-, Halogenphenylhydroxyphosphonmethyl-, Phenylaminophosphonmethyl-, Halogenphenylaminophosphonmethyl-, Hydroxyphosphonmethyl-, Niederalkylhydroxyphosphonmethyl-, Halogen-niederalkylhydroxyphosphonmethyl- und Amino-niederalkylhydroxyphosphonmethyl-Radikale ein; die Bezeichnung «nieder» bezieht sich auf eine Gruppe mit 1 bis 8, vorzugsweise 1 bis 4 Kohlenstoffatomen.

Phosphorhaltige Verbindungen mit Vinylgruppen sind gegenüber solchen Verbindungen mit Allylgruppen bevorzugt, wobei Monoester von Phosphinsäure, phosphoriger Säure und Phosphorsäure, die eine Vinyl- oder Allylgruppe, insbesondere Vinylgruppe aufweisen, derzeit bevorzugt sind. Repräsentative phosphorhaltige Verbindungen schliessen – ohne Beschränkung hierauf – Methaphosphorsäure, 2-Methacryloyloxyethylphosphat, bis-(2-Methacryloyloxyethyl)-phosphat, 2-Acryloyloxyethyl)-phosphat, bis-(2-Acryloyloxyethyl)-phosphat, Methyl-(2-methacryloyloxyethyl)-phosphat, Ethylmethacryloyloxyethylphosphat, Methylacryloyloxyethylphosphat, Ethylacryloyloxyethylphosphat, Verbindungen nach Formel IV, bei denen $R^3$ Wasserstoff oder Methyl und $R^4$ ein Propyl-, Isobutyl-, Ethylhexyl-, Halogenpropyl-, Halogenisobutyl- oder Halogenethylhexyl-Radikal ist, Vinylphosphonsäure, Cyclohexen-3-phosphonsäure, alpha-Hydroxybuten-2-phosphonsäure, 1-Hydroxy-1-phenylmethan-1,1-diphosphonsäure, 1-Hydroxy-1-methyl-1,1-diphosphonsäure, 1-Amino-1-phenyl-1,1-diphosphonsäure, 3-Amino-1-hydroxypropan-1,1-diphosphonsäure, Amino-tris-(methylenphosphonsäure), gamma-Aminopropylphosphonsäure, gamma-Glycidoxypropylphosphonsäure, Phosphorsäure-mono-2-aminoethylester, Allylphosphonsäure, Allylphosphinsäure, β-Methacryloyloxyethylphosphinsäure, Diallylphosphinsäure, bis-(β-Methacryloyloxyethyl)-phosphinsäure und Allylmethacryloyloxyethyl-phosphinsäure ein.

Ohne Rücksicht darauf, ob sie als polymerisierbares Klebergemisch oder als Bindungsaktivator vorhanden ist, ist die phosphorhaltige Verbindung immer in einer Menge vorhanden, die im Bereich von etwa 0,1 bis etwa 20, vorzugsweise von 2 bis etwa 10 Gew.-% liegt, bezogen auf das Gesamtgewicht der polymerisierbaren Kleberzusammensetzung, einschliesslich Reduktionsmittel.

Die bei dem erfindungsgemässen Klebersystemen verwendeten Abbindebeschleuniger bestehen im wesentlichen aus

(1) 0,5 bis etwa 30, vorzugsweise von etwa 1 bis etwa 10 Gew.-%, bezogen auf das Gesamtgewicht des Bindungsaktivators, mindestens eines Oxidationsmittels, das als Oxidationsmittel eines Redoxkoppelkatalysatorsystems wirken kann, und

(2) etwa 70 bis etwa 99,5 Gew.-%, bezogen auf das Gesamtgewicht des Abbindebeschleunigers, einer Trägersubstanz. Zusätzlich enthält der Abbindebeschleuniger auch entweder das Epoxidharz oder die ungesättigte organische Phosphorverbindung darunter.

Die bei den erfindungsgemässen Klebstoffsystemen verwendeten bei Zimmertemperatur reaktionsfähigen Redoxkoppelkatalysatorsysteme sind bekannt und brauchen im einzelnen hier nicht besprochen zu werden. Grundsätzlich umfassen solche Systeme wenigstens ein Oxidationsmittel und mindestens ein Reduktionsmittel, die bei Zimmertemperatur miteinander unter Bildung von freien, bei den erfindungsgemässen Klebstoffen zur Einleitung von additiven Polymerisationsreaktionen wirksamen Radikalen miteinander reagieren können. Im wesentlichen können alle bekannten miteinander so reagierenden Oxidations- und Reduktionsmittel bei der Ausführung der vorliegenden Erfindung benutzt werden. Repräsentative Oxidationsmittel schliessen – ohne Begrenzung hierauf – organische Peroxide wie Benzoylperoxid und andere Diacylperoxide, Hydroperoxide wie Cumolhydroperoxid, Perester wie t-Butylperoxybenzoat, Ketonhydroperoxide wie Methylethylketon, organische Salze von Übergangsmetallen wie Kobaltnaphthenat, und ein labiles Chloratom enthaltende Verbindungen wie Sulfonylchlorid ein. Repräsentative Reduktionsmittel schliessen – ohne Begrenzung hierauf – Sulfinsäuren, Azoverbindungen wie Azoisobuttersäuredinitril, alpha-Aminosulfone wie bis-(Tolylsulfonmethyl)-amin, bis-(Tolylsulfonmethyl)-ethylamin und bis-(Tolylsulfonmethyl)-benzylamin, tertiäre Amine wie Diisopropyl-p-toluidin, Dimethylanilin und Dimethylp-toluidin sowie Aminaldehydkondensationsprodukte, wie z.B. die Kondensationsprodukte von aliphatischen Aldehyden wie Butylaldehyd mit primären Aminen wie Anilin oder Butylamin ein. Die Verwendung von bekannten Beschleunigern oder Promotoren mit den Redoxkoppelkatalysatorsystemen kann Vorteile bringen. Vorzugsweise wird Oxidationsmittel in einem Anteil im Bereich von etwa 0,5 bis etwa 30, vorzugsweise etwa 1 bis etwa 10 Gew.-% des Abbindebeschleunigers vorhanden sein, wobei der Anteil des Reduktionsmittels im Bereich von etwa 0,05 bis etwa 10, vorzugsweise etwa 0,1 bis etwa 6 Gew.-% des polymerisierbaren Klebstoffgemisches liegt.

Die Trägersubstanzen, die zur Verwendung bei den erfindungsgemässen Abbindebeschleunigern geeignet sind, können einfach inerte Lösungs- oder Verdünnungsmittel wie Methylenchlorid oder Butylbenzylphthalat sein, einschliesslich Gemischen von derartigen Lösungs- oder Verdünnungsmitteln. Die Trägersubstanzen sollten nicht mehr als 5 Gew.-% eines bei Zimmertemperatur mit dem Oxidationsmittel reaktionsfähigen Anteils enthalten. Die Trägersubstanzen können ein komplizierteres Gemisch einschliesslich mindestens eines schichtbildenden Binders zusätzlich zu dem inerten Lösungs- oder Verdünnungsmittel sein. In diesem Fall ist der schichtbildende Binder vorzugsweise im wesentlichen inert bezüglich des Oxidationsmittels, das in dem Abbindebeschleunigergemisch vorhanden ist. Eine besonders bevorzugte Trägersubstanz mit mindestens einem Schichtbildungsbinder ist ein Gemisch aus etwa 0,05 bis etwa 50 Gew.-% von (1) mindestens einem gesättigten organischen polymeren schichtbildenden Binder mit einer Einfriertemperatur im Bereich von etwa 0 °C bis etwa 150 °C oder (2) mindestens ein Polymer-in-Monomer-Sirup wie bereits angeführt, und von etwa 40 bis etwa 99 Gew.-% mindestens eines organischen Lösungsmittels, das den schichtbildenden Binder, gegebenenfalls die phosphorhaltige Verbindung, falls diese in dem Abbindebeschleunigergemisch enthalten ist, und das Oxidationsmittel als stabile Lösung oder Dispersion halten kann. Unter den polymeren schichtbildenden Bindermaterialien, die bei der Trägersubstanz benutzt werden können, sind – ohne Begrenzung hierauf – Polyalkylacrylate und -Methacrylate und Copolymere davon, Polystyrol und Copolymere davon, Vinylpolymere und Copolymere, Polyester, Polyketone, Polysulfone, Phenolharze, Polyvinylbutyrale und Polycarbonate. Die Trägersubstanz kann zusätzlich zu dem Lösungsmittel oder zu dem Lösungsmittel plus schichtbildendem Binder Zusätze wie äussere Weichmacher, Flexibilisierer, Suspensionshilfsmittel und Stabilisatoren enthalten, vorausgesetzt, dass keine dieser Zusätze die Stabilität des Abbindebeschleunigergemisches schädlich beeinflussen.

Da die Hinzufügung von phosphorhaltigen Verbindungen zu dem polymerisierbaren Acrylklebstoffgemisch eine Verzögerungswirkung hervorrufen kann, die direkt proportional dem Anteil dieser Verbindungen ist, kann der Zusatz von 0,01 bis 10 und vorzugsweise von 0,5 bis 5 Gew.-%, bezogen auf die polymerisierbaren Materialien, von tertiären Aminen mit der Formel

V. 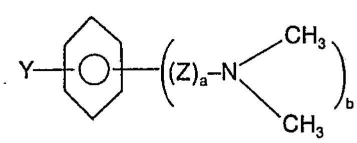 ,

wobei Z Methylen bedeutet, Y Wasserstoff, Hydroxy, Amino, Halogen, eine Alkylgruppe mit 1 bis 8, vorzugsweise 1 bis 4, Kohlenstoffatomen oder eine Alkoxygruppe mit 1 bis 8, vorzugsweise 1 bis 4, Kohlenstoffatomen bedeutet, a = 0 oder 1 und b = 1 oder 2 ist, zur Beschleunigung des Aushärtvorganges bei derartigen, ungesättigte organische Phosphorverbindungen enthaltenden Klebstoffzusammensetzungen vorteilhaft sein. Besonders bevorzugte tertiäre Amine sind N,N-Dimethylanilin und N,N-Dimethylaminomethylphenol. Es ist wichtig zu bemerken, dass tertiäre Amine, die nicht der Formel V entsprechen, keine Wirksamkeit als Aushärtbeschleuniger bei polymerisierbaren Acrylklebstoffgemischen besitzen, welche ungesättigte organische Phosphorverbindungen nach den Formeln I–IV enthalten.

Es hat sich ferner gezeigt, dass die Beständigkeit gegenüber Umgebungseinflüssen der beschriebenen Klebersysteme durch Zusatz von etwa 0,005 bis etwa 15, vorzugsweise etwa 0,1 bis etwa 10 Gew.-%, bezogen auf das Gesamtgewicht der polymerisierbaren Klebstoffzusammensetzung, eines Gemisches aus einem Metallmolybdat, das aus der aus Zinkmolybdat, Calciummolybdat, Bariummolybdat, Strontiummolybdat und deren Gemischen bestehenden Gruppe ausgewählt wurde, mit einem Metallphosphat, das aus der aus Zinkphosphat, Calciumphosphat, Magnesiumphosphat und deren Gemischen bestehenden Gruppe ausgewählt wurde, verbessert werden kann. Dabei sollte das Metallmolybdat mit einem Volumenanteil, basierend auf etwa 2 bis etwa 3 Teile pro Teil des Metallphosphates vorhanden sein. Derartige Gemische einschliesslich ihrer Vorbereitung sind in der US-PS 4 017 315 beschrieben, auf welche Bezug genommen wird.

Es hat sich auch herausgestellt, dass polybasische Bleisalze der Säuren des Phosphors und gesättigter sowie ungesättigter organischer Dicarbonsäuren und Dicarbonsäureanhydride, insbesondere dibasisches Bleiphthalat, tribasisches Bleimaleatmonohydrat, tetrabasisches Bleifumarat, dibasisches Bleiphosphit und Mischungen daraus sowie Zinkoxid in einem Anteil im Bereich von etwa 0,1 bis etwa 15, vorzugsweise etwa 1 bis etwa 10 Gew.-%, bezogen auf das Gesamtgewicht der polymerisierbaren Klebstoffzusammensetzung, ebenfalls zur Verbesserung der Beständigkeit gegenüber Umgebungseinflüssen wirksam sind.

Andere üblicherweise bei Klebstoffzusammensetzungen benutzte Zusätze wie Füllstoffe, Pigmente und dergleichen können den beschriebenen Klebstoffsystemen zugesetzt werden.

Die Grund-Klebstoffzusammensetzungen und Abbindebeschleuniger werden nach üblichen Verfahren hergestellt, wie sie beispielsweise in den US-PS 3 832 274 und 3 890 407 beschrieben sind.

Die erfindungsgemässen Klebstoffsysteme werden als Mehrfachpackungs-Klebersysteme bereitgestellt, bei denen ein Teil das polymerisierbare Klebstoffgemisch und ein zweiter Teil den Abbindebeschleuniger enthält. Die beiden Teile werden zum Zeitpunkt der Ingebrauchsnahme gemischt. Es ist notwendig, dass das Epoxidgemisch getrennt von den Bestandteilen gehalten wird, die saure Anteile besitzen, wie z.B. die ungesättigten organischen Phosphorverbindungen und die Methacrylsäure, um eine vorzeitige Reaktion dieser Bestandteile miteinander zu verhindern. So wird vor der Verwendung der Zusammensetzungen eine Packung den ungesättigten organischen Phosphor-Partialester und die andere Packung das Epoxidharz enthalten. Vorzugsweise wird das Epoxidharz in den Abbindebeschleuniger aufgenommen, der das Oxidationsmittel des Redoxkoppelkatalysatorsystems enthält, während die organische Phosphorverbindung in der Packung enthalten ist, die die polymerisierbare Klebstoffzusammensetzung enthält. Es sind auch andere Mehrfachpackungssysteme vorstellbar, so kann z.B. der Abbindebeschleuniger das Reduktionsmittel des Redoxkoppelkatalysatorsystems enthalten und das Epoxidharz mit dem Oxidationsmittel und den Polymerisationshemmern wird in die Packung aufgenommen, die die polymerisierbare Klebermasse enthält, jedoch sind diese Verpakkungsarten bezüglich der Lagerhaltungszeit weniger zu bevorzugen. Nach dem Mischen der einzelnen Teile werden eine der zu verbindenden Oberflächen oder beide Oberflächen mit dem gemischten Klebersystem beschichtet und die Flächen werden miteinander in Berührung gebracht. Das erfindungsgemässe Klebersystem kann zur Verbindung von Metallflächen wie Stahl, Aluminium und Kupfer mit einer Vielzahl von Substraten, einschliesslich Metall, Kunststoff und anderen Polymeren, verstärkten Kunststoffen, Fasern, Glas, Keramik, Holz und dergleichen benutzt werden.

Eine besondere Eigenschaft der vorliegenden Erfindung besteht darin, dass die beschriebenen Klebstoffzusammensetzungen benützt werden können, um Metallsubstrate wie Stahl, Aluminium und Kupfer mit geringer oder gänzlich ohne Vorbehandlung der Metalloberfläche vor dem Aufbringen des Klebstoffes zu verkleben. Damit kann die Verklebung auch bei öligen Metalloberflächen, die sonst sauber sind, ohne grosse Vorbehandlung durchgeführt werden, während sonst bei der grossen Mehrheit der gegenwärtig erhältlichen Primer und Kleber eine solche erforderlich ist. Dazu kommt, dass die erfindungsgemässen Klebersysteme eine wirksame Verbindung bei Raumtemperatur ergeben, so dass weder beim Aufbringen des Klebers auf die Substrate noch beim Aushärten ein Erwärmungsvorgang erforderlich ist. Die Klebstoffsysteme können auch bei porösen Substraten verwendet werden, anders, als es bei den anaeroben Klebern der Fall ist, die den Ausschluss von Luft erfordern und deswegen nicht eingesetzt werden können, wenn die zu verbindenden Flächen in ihren Poren Luft enthalten.

Die Erfindung wird durch die nachfolgenden Ausführungsbeispiele näher erläutert; alle Angaben nach Teilen, Verhältnissen und Prozentsätzen sind dabei als Gewichtsteile, Gewichtsverhältnisse und Gewichtsprozente zu lesen, wenn nicht anders angegeben.

Beispiel 1

Es wurde ein Klebstoffharz, im folgenden als AR-I bezeichnet, durch eine Reaktion von 1,0 mol Polycaprolactontriol mit einem durchschnittlichen Molekulargewicht von 540 mit 0,65 mol Polycaprolactondiol mit einem durchschnittlichen Molekulargewicht von 2000 und 4,3 mol Toluoldiisocyanat in Anwesenheit einer katalytischen Menge von Dibutylzinndilaurat und Methylmethacrylat-Verdünner präpariert, bis sämtliche Hydroxidgruppen umgesetzt waren, wobei sich ein isocyanat-funktionelles Urethanvorpolymer, gelöst in dem Methylmethacrylat-Verdünner, ergab. Zu dem Reaktionsgemisch wurden 4,3 mol Hydroxyethylacrylat zugesetzt und die Reaktion fortgeführt, bis alle Isocyanat-Anteile reagiert hatten, so dass sich ein acryliertes Polyurethanharz AR-I mit 65% Harzfeststoff in Methylmethacrylatmonomeren (MMA) als Verdünnungsmittel ergab.

Beispiel 2

Es wurden Klebstoffsysteme in üblicher Weise vorbereitet mit den folgenden Zusammensetzungen (in Gewichtsteilen):

| Klebstoffzusammensetzung | II-A | II-B |
|---|---|---|
| AR-I (Bsp. 1, 65% AR-I in MMA) | 20,6 | 23,8 |
| Carboxyliertes Poly-(1,3-butadien/acrylnitril)-elastomer | 38,3 | 45,6 |
| Methylmethacrylat | 5,7 | 7,4 |
| Methacrylsäure | 0,0 | 7,6 |
| Diisopropanol-p-toluidin | 1,0 | 1,3 |
| Dimethylanilin | 1,6 | 1,8 |
| gemahlene Glasfasern | 15,3 | 0,0 |
| Kalziumcarbonat (3 Vol. Tle.)/ Zinkphosphat (1 Vol.-Teil) | 3,7 | 4,3 |
| Siliciumdioxid | 3,8 | 5,0 |
| Paraffinwachs | 0,3 | 0,0 |
| 2-Methacryloyloxyethylphosphat (70% in MMA) | 5,2 | 4,2 |
| Benzoylperoxid (40% in Dibutylphthalat) | 4,0 | 4,0 |
| Bisphenol A Epoxidharz | unterschiedlich[a)] | 0[a)] |

a) = Die Epoxidharzmenge wurde von 0 Gew.-Teilen bis 40,5 Gew.-Teilen verändert, so dass sich II-A-Klebersysteme mit Epoxid-Äquivalenten/POH-Äquivalentwerten von 0, 1, 2, 3, 4 und 6 ergaben. Bei dem Klebersystem II-B ist dieser Verhältniswert gleich 0.

Nach dem Mischen der Bestandteile zur Herstellung von homogenen Gemischen wurden die Klebersysteme zum Verkleben von Stahl auf Stahl (SAE 1010 kaltgewalzter Stahl) verwendet. Die vollständig vermischten Klebstoffe wurden auf die eine zu verklebende Oberfläche aufgebracht und die zweite nichtbeschichtete zu verklebende Oberfläche wurde zur Herstellung der zu untersuchenden Verbindungen auf den Klebstoff aufgepresst. Die Gesamtstärke der Klebstoffschicht betrug bei jeder Verklebung ca. 0,5 mm (20 mil). Die zu untersuchenden Stücke wurden 12 Stunden bei Zimmertemperatur ausgehärtet, und nach dem Aushärtungsvorgang wurde ein Drittel der Probestücke einer zweistufigen Ausheiz-Wärmebehandlung (30 min bei 138 °C und 30 min bei 204 °C) unterworfen und auf Zimmertemperatur abgekühlt, und ein weiteres Drittel der Probestücke wurde 30 Minuten lang bei 204 °C eingebrannt und nicht abgekühlt. Es wurden dann Überlapp-Scheruntersuchungen (lap shear tests) bei Zimmertemperatur bzw. bei 204 °C an den ausgehärteten Probestücken entsprechend der US-Norm ASTM D-1002-72 durchgeführt. Die Testergebnisse sind in MPa in Tabelle II aufgeführt.

Tabelle II

| Klebstoff | Verh. Äqu. EP/ zu Äqu. POH | Überlapp-Scherfestigkeit (MPa) ZT[b] | WB/ZT[c] | 204 °C[d] |
|---|---|---|---|---|
| II-A | 0 | 7,86 | 10,80 | 0,46 |
| II-A | 1 | 8,83 | 14,41 | 1,04 |
| II-A | 2 | 9,17 | 16,62 | 1,72 |
| II-A | 3 | 9,38 | 15,24 | 1,42 |
| II-A | 4 | 9,72 | 14,00 | 1,20 |
| II-A | 6 | 10,00 | 11,10 | 0,33 |
| II-B | 0 | 19,03 | 9,24 | 0,11 |

b): Teststücke nach dem Aushärten bei Zimmertemperatur gemessen.

c): Teststücke nach dem Aushärten wärmebehandelt (30 Minuten 138 °C/30 Minuten 204 °C) auf Zimmertemperatur abgekühlt und gemessen.

d): Teststücke nach dem Aushärten 30 Minuten bei 204 °C behandelt und bei 204 °C gemessen.

Die Angaben zeigen klar die Verbesserung der Wärmefestigkeit und des Hochtemperaturverhaltens, wenn die Klebstoffsysteme Epoxidharz und ungesättigte organische Phosphor-Partialester enthalten und zeigen auch die Auswirkung des Epoxidgehaltes (Epoxid: POH-Verhältnis) auf die Klebefestigkeit.

Beispiel 3

Es wurden in üblicher Weise Klebstoffsysteme durch Mischen der folgenden Bestandteile (Gewichtsteile sind angegeben) vorbereitet:

| Klebstoff | III-A | III-B | III-C |
|---|---|---|---|
| AR-I (Bsp. 1, 65% in MMA) | 20,6 | 20,6 | – |
| Carboxylierter Poly-(1,3-butadienacrylnitril)-kautschuk | 38,3 | 38,3 | – |
| Methylmethacrylat | 5,7 | 5,7 | – |
| Trimethylolpropan-trimethacrylat | 4,6 | 4,6 | – |
| Diisopropyl-p-toluidin | 1,0 | 1,0 | – |
| Dimethylanilin | 1,6 | 1,6 | – |
| Gemahlene Glasfasern | 15,3 | 15,3 | – |

(Fortsetzung)

| Klebstoff | III-A | III-B | III-C |
|---|---|---|---|
| Kalziumcarbonat (3 Vol. Tle.)/ Zinkphosphat (1 Vol.-Tl.) | 3,7 | 3,7 | – |
| Siliziumdioxid | 3,8 | 3,8 | – |
| Paraffinwachs | 0,3 | 0,3 | – |
| 2-Methacryloyloxyethylphosphat (70% in Methylmethacrylat) | 5,2 | 5,2 | 3,6 |
| Benzoylperoxid (40% in Dibutylphthalat) | 4,0 | 4,0 | – |
| Bisphenol-A-epoxidharz Äquivalentgewicht 185 | 0,0 | 25,8 | 25,8 |
| Äquivalente: Epoxid | 0,0 | 0,13 | 0,13 |
| P–OH | 0,034 | 0,034 | 0,034 |

Die so hergestellten Klebstoffsysteme wurden zum Verkleben von angelassenen kaltgewalzten Stahlelementen aus Stahl SAE 1010 benutzt entsprechend dem Vorgang in Beispiel 2, einschliesslich Vorbereitung der Probestücke, Aushärtung des Klebers, gegebenenfalls Wärmebehandlung und Untersuchung der Klebefestigkeit. Die Ergebnisse sind in MPa in Tabelle III zusammengefasst.

Tabelle III

| Klebstoff | Überlappscherfestigkeit MPa ZT | WB/ZT | 204 °C |
|---|---|---|---|
| III-C | 3,07 | 7,72 | <0,07 |
| III-A | 7,86 | 10,79 | 0,46 |
| III-B | 9,72 | 14,00 | 1,20 |

Diese Angaben, die das Verhalten von Epoxid-, Epoxid-/Acryl- und Acryl-Klebstoffsystemen vergleichen, die ungesättigte organische Phosphor-Partialester enthalten, sprechen für sich selbst.

Beispiel 4

Klebstoffsysteme wurden üblicherweise mit den folgenden Zusammensetzungen (Mengen in Gewichtsteilen) vorbereitet:

| Klebstoff | IV-A | IV-B | IV-C | IV-D | IV-E | IV-F | IV-G |
|---|---|---|---|---|---|---|---|
| AR-I (Bsp. 1, 65% in MMA) | 20,6 | 20,6 | 20,6 | 20,6 | 20,6 | 20,6 | 20,6 |
| Carboxyliertes Poly-(butadien/Acrylnitril)-Elastomer | 38,3 | 38,3 | 38,3 | 38,3 | 38,3 | 38,3 | 38,3 |
| Methylmethacrylat | 5,7 | 5,7 | 5,7 | 5,7 | 5,7 | 5,7 | 5,7 |
| Trimethylolpropantrimethacrylat | 4,6 | 4,6 | 4,6 | 4,6 | 4,6 | 4,6 | 4,6 |
| Diisopropyl-p-toluidin | 1,0 | 1,0 | 1,0 | 1,0 | 1,0 | 1,0 | 1,0 |
| Dimethylanilin | 1,6 | 1,6 | 1,6 | 1,6 | 1,6 | 1,6 | 1,6 |
| gemahlene Glasfasern | 15,3 | 15,3 | 15,3 | 15,3 | 15,3 | 15,3 | 15,3 |
| Kalziumcarbonat (3 Vol.-Tle./Zinkphosphat) (1 Vol.-Tl.) | 3,7 | 3,7 | 3,7 | 3,7 | 3,7 | 3,7 | 3,7 |
| Siliziumdioxid | 3,8 | 3,8 | 3,8 | 3,8 | 3,8 | 3,8 | 3,8 |
| Paraffinwachs | 0,3 | 0,3 | 0,3 | 0,3 | 0,3 | 0,3 | 0,3 |
| 2-Methacryloyloxyethylphosphat (70% in MMA) | 5,2 | 5,2 | 5,2 | 5,2 | 5,2 | 5,2 | 5,2 |
| Benzoylperoxid (40% in Dibutylphthalat) | 4,0 | 4,0 | 4,0 | 4,0 | 4,0 | 4,0 | 4,0 |
| Bisphenol-A-epoxidharz | 25,8 | 25,8 | 25,8 | 25,8 | 25,8 | 25,8 | 25,8 |
| 2-Methacryloyloxyethylphosphat (70% in MMA) | 0,0 | 1,0 | 2,0 | 0,0 | 0,0 | 0,0 | 0,0 |
| Phosphorsäure | 0,0 | 0,0 | 0,0 | 1,0 | 2,0 | 0,0 | 0,0 |
| 2-Hydroxyethylmethacrylat | 0,0 | 0,0 | 0,0 | 0,0 | 0,0 | 10,0 | 0,0 |
| Methacrylsäure | 0,0 | 0,0 | 0,0 | 0,0 | 0,0 | 0,0 | 3,0 |

Die so vorbereiteten Klebstoffe wurden gemischt, aufgetragen, aufgehärtet und getestet nach den bei Beispielen 2 und 3 beschriebenen Verfahren, jedoch wurde hier nicht angelassener kaltgewalzter Stahl SAE 1010 verwendet. Die erhaltenen Daten sind in Tabelle IV angegeben.

Tabelle IV

| Klebstoff | Überlapp-Scherfestigkeit (MPa) ZT | WB/ZT | 204°C |
|---|---|---|---|
| IV-A | 21,64 | 31,34 | 1,13 |
| IV-B | 24,86 | 32,82 | 0,97 |
| IV-C | 24,13 | 31,90 | 0,79 |
| IV-D | 23,23 | 25,37 | 0,62 |
| IV-E | 22,61 | 22,06 | 0,19 |
| IV-F | 30,89 | 32,90 | 0,85 |
| IV-G | 28,27 | 31,30 | 1,96 |

Die Daten sprechen für sich selbst.

Beispiel 5

Es wurden Klebstoffzusammensetzungen in üblicher Weise durch Mischen der folgenden Bestandteile (Mengen in Gewichtsteilen) vorbereitet:

| Klebstoff | V-A | V-B |
|---|---|---|
| AR-I (Bsp. 1, 65 % AR-I in MMA) | 20,6 | 23,8 |
| Carboxyliertes Poly-(1,3-butadien/Acrylnitril)-Elastomer | 38,3 | 45,6 |
| Methylmethacrylat | 5,7 | 7,4 |
| Methacrylsäure | 0,0 | 7,6 |
| Diisopropyl-p-toluidin | 1,0 | 1,3 |
| Dimethylanilin | 1,6 | 1,8 |
| gemahlene Glasfasern | 15,3 | 0,0 |
| Kalziumcarbonat (3 Vol.-Tle.)/ Zinkphosphat (1 Vol.-Tl.) | 3,7 | 4,3 |
| Siliziumdioxid | 3,8 | 5,0 |
| Paraffinwachs | 0,3 | 0,0 |
| 2-Methacryloyloxyethylphosphat (70 % in MMA) | 5,2 | 4,2 |
| Benzoylperoxid (40 % in Dibutylphthalat) | 4,5 | 4,0 |
| Bisphenol-A-epoxidharz, Äquivalent-Gewicht 450 | 6,1 | 0,0 |
| Bisphenol-A-epoxidharz, Äquivalent-Gewicht 190 | 24,4 | 0,0 |
| Kalziumcarbonat | 24,5 | 0,0 |
| Siliziumdioxid | 0,6 | 0,0 |

Die so fertiggestellten Klebstoffe wurden zum Verkleben von nicht angelassenen Stahlzusammenstellungen benutzt gemäss den Anwendungs- und Aushärtungsverfahren nach Beispiel 2. Nach dem Aushärten wurden die verbundenen Metallteile während unterschiedlicher Zeiträume bei 204 °C behandelt und bei dieser Temperatur entsprechend dem Verfahren ASTM D-1002-72 geprüft. Die Prüfergebnisse sind in Tabelle V zusammengefasst.

Tabelle V

| Behandlungszeit bei 204°C, h | Überlappscherfestigkeit (MPa) Klebstoff V-A | Klebstoff V-B |
|---|---|---|
| 0[a] | 31,23 | 40,95 |
| 2 | 25,51 | 12,55 E&G[b] |
| 4 | 23,30 | 10,20 E&G[b] |
| 8 | 27,03 | 12,00 E&G[b] |
| 16 | 33,65 | 3,72 E&G[b] |
| 24 | 30,75 | 5,38 E&G[b] |
| 72 | 30,06 | 6,76 E&G[b] |

a : Anfangsprüfwerte bei Zimmertemperatur genommen

b : Der Klebstoff war entfärbt und ausgegast

Die Daten sprechen für sich selbst.

Beispiel 6

Der Kleber V–A aus Beispiel 5 wurde zum Verkleben folgender Metalle verwendet: angelassener kaltgewalzter Stahl, Aluminium Typ 6061 T6, Edelstahl Typ 302 und galvanisierter kaltgewalzter angelassener Stahl Typ G-90. Die Testanordnungen wurden entsprechend den in Beispiel 2 beschriebenen Vorgängen präpariert und ausgehärtet. Nach dem Aushärten wurde folgende Nachbrennbehandlung vorgenommen:

a) Aufheizen 10 min auf 163 °C, Abkühlen auf Zimmertemperatur

b) Aufheizen 23 min auf 121 °C, Abkühlen auf Zimmertemperatur

c) Aufheizen 45 min auf 163 °C, Abkühlen auf Zimmertemperatur

d) Aufheizen 45 min auf 135 °C, Abkühlen auf Zimmertemperatur

e) Aufheizen 30 min auf 121 °C, Abkühlen auf Zimmertemperatur

f) Aufheizen 40 min auf 121 °C, Abkühlen auf Zimmertemperatur und

g) Aufheizen 45 min auf 163 °C, Abkühlen auf Zimmertemperatur

Nach diesem Ausheizen wurden Überlapp-Scheruntersuchungen nach ASTM D-1002-72 bei verschiedenen Temperaturen ausgeführt. Die Ergebnisse sind in Tabelle VI zusammengefasst.

Tabelle VI

| Substrat | Überlapp-Scherfestigkeit (MPa) −29°C | ZT | 85°C | 204°C |
|---|---|---|---|---|
| Angelassener kaltgewalzter Stahl | 6,43 (CM) | 22,34 (CM) | 15,81 (CM) | 1,87 (C) |
| Aluminium 6061 T6 | 6,32 (CM) | 23,72 (CM) | 18,30 (C) | 1,61 (C) |
| Edelstahl 302 | 10,69 (CM) | 29,60 (CM) | 15,72 (C) | 1,68 (C) |
| Galvanisierter Stahl G-90 | 8,32 (CM) | 21,79 (CM) | 19,49 (C) | 1,81 (C) |

CM : Ablösen der Grenzfläche Klebstoff/Metall

C : Aufbrechen der Klebstoffschicht

Die Ergebnisse zeigen die Anwendbarkeit der erfindungsgemässen Klebstoffe bei einer Vielzahl von Metallsubstraten.

Beispiel 7

Die folgende zweiteilige Grundierungs-(Primer-)Zusammensetzung wurde vorbereitet, Mengenangaben in Gewichtsteilen.

| Bestandteil | Teil A | Teil B |
|---|---|---|
| Polymethylen-Poly-(phenyl-isocyanat) | 16,0 | – |
| Hexakismethoxymelamin-aminoharz | – | 1,0 |
| Dibutylzinndilaurat | – | 0,15 |
| Methylenchlorid | 84,0 | 98,85 |

Die einzelnen Teile A und B der Grundierungszusammensetzung wurden gemischt und auf glasfaserverstärkte Kunststoffplatten auf Polyesterbasis aufgetragen. Die Kunststoffplatten wurden mit einem im nassen Zustand 2,5 µm starken (0,1 mil) Film der Grundierung beschichtet, und diese wurde 30 min bei Umgebungstemperatur und -feuchtigkeit getrocknet. Die grundierten Kunststofftafeln wurden mit folgenden Materialien verklebt: (1) angelassener kaltgewalzter Stahl 1010, (2) galvanisierter angelassener kaltgewalzter Stahl G-90 und (3) gleichartigen Kunststofftafeln, die in gleicher Weise grundiert waren; dabei wurden die Substrate mit einer 0,5 mm (20 mil) starken Schicht des Klebstoffes V–A aus Beispiel 5 beschichtet. Alle Testanordnungen wurden gemäss Beispiel 2 ausgehärtet. Nach dem Aushärten wurden die Testanordnungen dem in Beispiel 6 beschriebenen Nachbrennzyklus unterworfen und entsprechend dem im Beispiel 6 beschriebenen Vorgang untersucht. Die Ergebnisse sind in Tabelle VII zusammengefasst:

Tabelle VII

| Substrat | Überlapp-Scherfestigkeit (MPa) | | | |
|---|---|---|---|---|
| | −29 °C | ZT | 85 °C | 204 °C |
| Kunststoff/Kunststoff | 4,45/FT | 5,03/FT | 6,16/FT | 0,39/66 FT[a] |
| Kunststoff/1010 Stahl | 4,55/CM | 7,31/40 FT[a] | 6,55/FT | 0,33/33 FT[a] |
| Kunststoff/Stahl G-90 | 5,88/CM | 6,41/FT | 5,58/FT | 0,15 P |

FT : 100% faserreissende Bindung, Substrat reisst auf
CM : 100% Aufreissen an der Grenzfläche Kleber-Metall
P : 100% Aufreissen an der Grenzfläche Kunststoff-Grundierung
a : Prozentangabe des Faseraufreissens, der Rest des Versagens findet an der Grenzfläche Kunststoff-Grundierung statt.

Die Daten zeigen die Anwendbarkeit der entsprechend der Erfindung hergestellten Klebstoffzusammensetzungen bei der Verbindung von Kunststoff- mit Metallmaterialien.

Beispiel 8

Es wurden Klebstoffzusammensetzungen durch Mischen der folgenden Bestandteile hergestellt (Mengenangabe in Gewichtsteilen)

| Klebstoff | VIII-A | VIII-B | VIII-C | VIII-D |
|---|---|---|---|---|
| Carboxyliertes Poly-(1,3-butadien/Acrylnitril)-elastomer, (25% in Methylmethacrylat) | 40,0 | 40,0 | 40,0 | 40,0 |
| Styrol/1,3-Butadien-elastomer, (30% in Methylmethacrylat) | 40,0 | 40,0 | 40,0 | 40,0 |
| 2-Methacryloyloxyethylphosphat (70% in Methylmethacrylat) | 6,3 | 6,3 | 6,3 | 6,3 |
| Methacrylsäure | 3,0 | 3,0 | 3,0 | 3,0 |
| Methylmethacrylat | 4,0 | 3,5 | 3,0 | 2,5 |
| Trimethylolpropantrimethacrylat | 0,0 | 0,5 | 1,0 | 1,5 |
| Diisopropyl-p-toluidin | 1,3 | 1,3 | 1,3 | 1,3 |
| Dimethylanilin | 1,5 | 1,5 | 1,5 | 1,5 |
| Paraffinwachs | 0,3 | 0,3 | 0,3 | 0,3 |
| Siliziumdioxid | 2,4 | 2,4 | 2,4 | 2,4 |
| Benzoylperoxid (40% in Dibutylphthalat) | 4,5 | 4,5 | 4,5 | 4,5 |
| Cycloaliphatisches Epoxidharz | 30,0 | 30,0 | 30,0 | 30,0 |
| Kalziumcarbonat | 24,0 | 24,0 | 24,0 | 24,0 |
| Siliziumdioxid | 1,5 | 1,5 | 1,5 | 1,5 |

Die so hergestellten Klebstoffe (es ist darauf hinzuweisen, dass sich die Bestandteile nicht sehr einfach mischen liessen) wurden benutzt, um angelassenen kaltgewalzten Stahl miteinander zu verkleben. Die Testanordnungen wurden entsprechend den in Beispiel 2 beschriebenen Vorgängen behandelt und ausgehärtet. Nach dem Aushärten wurden die Testanordnungen 30 min lang bei 94 °C und 30 min bei 204 °C nachbehandelt. Überlapp-Scheruntersuchungen wurden dann bei 204 °C entsprechend dem Vorgang nach ASTM D-1002-72 ausgeführt. Die Ergebnisse sind in Tabelle VIII zusammengefasst.

Tabelle VIII
Klebstoffverhalten bei erhöhter Temperatur

| Klebstoff | Überlapp-Scherfestigkeit (MPa) 204 °C |
|---|---|
| VIII-A | 0,08 |
| VIII-B | 0,66 |
| VIII-C | 1,28 |
| VIII-D | 1,95 |

Die Ergebnisse zeigen die Auswirkung von Vernetzung auf das Verhalten des Klebstoffes.

Beispiel 9

Es wurden folgende Klebstoffzusammensetzungen durch Mischen der angegebenen Bestandteile hergestellt (Mengenangaben in Gewichtsteilen):

| Klebstoff | IX-A | IX-B | IX-C | IX-D | IX-E | IX-F |
|---|---|---|---|---|---|---|
| Carboxyliertes Poly-(1,3-butadien/Acrylnitril)-elastomer (25% in Methylmethacrylat) | 35,0 | 35,0 | 35,0 | 35,0 | 30,0 | 30,0 |
| Styrol/1,3-Butadien-elastomer (30% in Methylmethacrylat) | 25,0 | 25,0 | 30,0 | 30,0 | 30,0 | 30,0 |
| 2-Methacryloyloxyethyl-phosphat (70% in Methylmethacrylat) | 6,3 | 6,3 | 6,3 | 6,3 | 6,3 | 6,3 |
| Methacrylsäure | 3,0 | 3,0 | 3,0 | 3,0 | 3,0 | 3,0 |
| Methylmethacrylat | 23,5 | 23,5 | 18,5 | 18,5 | 23,5 | 23,5 |
| Trimethylolpropan-trimethacrylat | 0,5 | 0,5 | 0,5 | 0,5 | 0,5 | 0,5 |
| Diisopropyl-p-toluidin | 1,3 | 1,3 | 1,3 | 1,3 | 1,3 | 1,3 |
| Dimethylanilin | 1,5 | 1,5 | 1,5 | 1,5 | 1,5 | 1,5 |
| Paraffinwachs | 0,3 | 0,3 | 0,3 | 0,3 | 0,3 | 0,3 |
| Siliziumdioxid | 2,4 | 2,4 | 2,4 | 2,4 | 2,4 | 2,4 |
| Cycloaliphatische Epoxidharz | 50,0 | 40,0 | 50,0 | 40,0 | 50,0 | 40,0 |
| CBTN-modifiziertes Bisphenol A-epoxidharz[a] | 0,0 | 10,0 | 0,0 | 10,0 | 0,0 | 10,0 |
| Kalziumcarbonat | 24,0 | 24,0 | 24,0 | 24,0 | 24,0 | 24,0 |
| Siliziumdioxid | 1,5 | 1,5 | 1,5 | 1,5 | 1,5 | 1,5 |
| Bezoylperoxid (40% in Dibutylphthalat) | 4,5 | 4,5 | 4,5 | 4,5 | 4,5 | 4,5 |

[a] : mit Carboxyl-Endgruppen versehenes Poly-(1,3-butadien/Acrylnitril)-elastomer-modifizertes Bisphenol-A-epoxidhard.

Die so hergestellten Klebstoffe (es ist darauf hinzuweisen, dass die Bestandteile sich nicht leicht vermischen liessen) wurden benutzt, um angelassenen kaltgewalzten Stahl zu verkleben. Die Testanordnungen wurden entsprechend den bei Beispiel 2 beschriebenen Vorgängen vorbereitet und ausgehärtet. Nach dem Aushärten wurden die Testanordnungen 30 min lang bei 94 °C und 30 min lang bei 204 °C einer Nachwärmebehandlung unterzogen. Dann wurden bei 204 °C die Überlapp-Schertests nach den Vorschriften ASTM D-1002-72 ausgeführt. Die Ergebnisse sind in Tabelle IX zusammengefasst.

Tabelle IX

| Klebstoff | Überlapp-Scherfestigkeit (MPa) bei 204 °C |
|---|---|
| IX-A | 1,19 |
| IX-B | 1,10 |
| IX-C | 1,15 |
| IX-D | 0,99 |
| IX-E | 1,52 |
| IX-F | 1,32 |

Die Daten sprechen für sich selbst.

Beispiel 10

Klebstoffzusammensetzungen wurden durch Mischen der folgenden Bestandteile vorbereitet (Mengenangabe in Gewichtsteilen):

| Klebstoff | X-A | X-B | X-C | X-D | X-E |
|---|---|---|---|---|---|
| Carboxyliertes Poly-(1,3-butadien/Acrylnitril)-elastomer (25% in MMA) | 35,0 | 35,0 | 35,0 | 35,0 | 35,0 |
| Styrol/1,3-Butadien-elastomer (30% in MMA) | 30,0 | 30,0 | 30,0 | 30,0 | 30,0 |
| 2-Methacryloyloxyethylphosphat (70% in MMA) | 6,3 | 6,3 | 6,3 | 6,3 | 6,3 |
| Methacrylsäure | 3,0 | 3,0 | 3,0 | 3,0 | 3,0 |
| Methylmethacrylat | 18,5 | 18,5 | 18,5 | 18,5 | 18,5 |
| Trimethylolpropan-trimethacrylat | 0,5 | 0,5 | 0,5 | 0,5 | 0,5 |
| Diisopropyl-p-toluidin | 1,3 | 1,3 | 1,3 | 1,3 | 1,3 |
| Dimethylanilin | 1,5 | 1,5 | 1,5 | 1,5 | 1,5 |
| Paraffinwachs | 0,3 | 0,3 | 0,3 | 0,3 | 0,3 |
| Siliziumdioxid | 2,4 | 2,4 | 2,4 | 2,4 | 2,4 |
| Benzoylperoxid (40% in Dibutylphthalat) | 2,4 | 2,4 | 2,4 | 2,4 | 2,4 |
| Cycloaliphatisches Epoxidharz | 60,0 | 57,75 | 47,5 | 41,25 | 33,0 |
| CBTN-modifiziertes Bisphenol-A-epoxidharz[a] | 6,0 | 0,0 | 0,0 | 0,0 | 0,0 |
| CBT-modifiziertes cycloaliphatisches Harz[b] | 0,0 | 8,25 | 16,5 | 24,75 | 33,0 |
| Kalziumcarbonat | 7,1 | 7,1 | 7,1 | 7,1 | 7,1 |
| Siliziumdioxid | 0,8 | 0,8 | 0,8 | 0,8 | 0,8 |

[a]: mit Carboxyl-Endgruppen versehenes Poly-(1,3-butadien/Acrylnitril)-elastomer-modifiziertes Bisphenol-A-Epoxidharz

[b]: mit Carboxyl-Endgruppen versehenes Poly-(1,3-butadien)-elastomer-modifiziertes cyclocarboxyliertes Epoxidharz.

Die so hergestellten Klebstoffe (es ist darauf hinzuweisen, dass sich die Bestandteile nicht leicht vermischen liessen) wurden zum Verkleben von angelassenem kaltgewalztem Stahl benutzt. Die Testanordnungen wurden entsprechend den in Beispiel 2 angegebenen Vorgängen vorbereitet und ausgehärtet. Nach dem Aushärten wurden die Testanordnungen einer Wärmenachbehandlung entsprechend Beispiel 6 unterzogen. Dann wurden entsprechend den Prüfvorschriften für Torsions-Aufschlagversuch von General Motors bei −29 °C Aufschlagversuche durchgeführt. Die Ergebnisse sind in Tabelle X zusammengefasst:

Tabelle X

| Klebstoff | Aufschlagfestigkeit in N bei −29 °C |
|---|---|
| X-A | 175,3 |
| X-B | 198,8 |
| X-C | 216,2 |
| X-D | 340,7 |
| X-E | 246,0 |

Die Ergebnisse zeigen die Auswirkung des Zumischens von elastomermodifizierten Epoxidharzen auf die Klebstoffeigenschaften bei tiefen Temperaturen.

**Patentansprüche**

1. Klebstoffzusammensetzung, die folgende Bestandteile enthält:

A. mindestens ein polymerisierbares polymeres Material, ausgewählt aus folgender Gruppe:

(1) mindestens ein olefinisch ungesättigtes Urethanreaktionsprodukt von mindestens einem Vorpolymer mit Isocyanatfunktionen und mindestens einem Monomer mit Hydroxylfunktionen, das mindestens eine polymerisierbare olefinisch ungesättigte Einheit aufweist, wobei das Reaktionsprodukt durch die Anwesenheit von mindestens zwei olefinisch ungesättigten Einheiten und die praktische Abwesenheit von freien Isocyanatgruppen ausgezeichnet ist,

(2) mindestens ein elastomeres polymeres Material auf Butadienbasis, ausgewählt aus der Gruppe:

(a) Homopolymere von Butadien,

(b) Copolymere von Butadien und mindestens einem damit copolymerisierbaren Monomer, ausgewählt aus der Gruppe Styrol, Acrylnitril, Methacrylnitril und deren Gemischen,

(c) modifiziertes elastomeres Material, ausgewählt aus der Gruppe der Homo- und Copolymeren von Butadien, wie vorher beschrieben, wobei diese Homo- und Copolymere modifiziert wurden durch Copolymerisation von Spurenmengen von bis zu 5 Gew.-%, bezogen auf das Gewicht des modifizierten elastomeren Materials, wenigstens eines funktionellen Monomeren, und

(d) deren Mischungen,

(3) mindestens ein Polymer-in-Monomer-Sirup, bestehend im wesentlichen aus:

(a) 2 bis 90 Gew.-% mindestens eines polymerisierbaren Additionspolymer,

(b) 10 bis 98 Gew.-% mindestens einer polymerisierbaren olefinisch ungesättigten monomeren Verbindung mit mindestens einer $-\overset{|}{C}=\overset{|}{C}-$Gruppe, und

(c) 0 bis 30 Gew.-% eines die Gruppe $(CH_2CCl=CHCH_2)_n$ enthaltenden Polymers, wobei n eine ganze Zahl ist, wobei (a) und (b) als partielles Polymerisationsprodukt von (b) oder von (b) in Anwesenheit von (c) vorhanden sind, das Gemisch von (a) und (b) oder von (a), und (c) ein Sirup von in unpolymerisiertem Monomer gelöstem oder dispergiertem Polymer ist, in welchem Sirup die Menge des von (b) abgeleiteten (a) im Bereich von 2 bis 90 Gew.-%, bezogen auf das Gesamtgewicht von (a), (b) und (c), liegt,

(4) mindestens ein polymerisierbares polymeres Material, ausgewählt aus der Gruppe Polyvinylalkylether, Styrolacrylnitrilharz, ungesättigtes Polyesterharz und deren Gemische, wobei der Alkylanteil des Polyvinylalkylethers 1 bis 8 Kohlenstoffatome enthält,

(5) mindestens ein Homopolymer oder Copolymer von mindestens einem Monomer, ausgewählt aus der Gruppe Styrol und Alkyl- oder Hydroxyalkylestern von Acrylsäure oder Methacrylsäure, wobei der Ester 1 bis 18 Kohlenstoffatome in dem Alkylanteil besitzt, und

(6) Gemische solcher Polymere,

B. mindestens ein polymerisierbares Material, ausgewählt aus der Gruppe Styrol, Acrylmonomer oder substituiertes Acrylmonomer und deren Gemische, wobei die Menge des polymerisierbaren Monomeren zusätzlich zu dem in (A) (3) vorhandenen Monomer vorhanden ist, sofern die Komponente (A) (3) in der Klebstoffzusammensetzung enthalten ist,

C. mindestens eine phosphorhaltige Verbindung mit mindestens einer olefinisch ungesättigten Gruppe und mindestens einer P-OH-Gruppe,

D. ein bei Zimmertempératur aktives Redoxkoppelkatalysatorsystem, dadurch gekennzeichnet, dass die Klebstoffzusammensetzung

E. mindestens eine Epoxidverbindung enthält, die in einer Menge von 1 bis 5 Epoxidäquivalenten je P-OH-Äquivalent vorliegt.

2. Klebstoffzusammensetzung nach Anspruch 1, dadurch gekennzeichnet, dass sie bis zu 10 Gew.-%, bezogen auf das Gesamtgewicht der Klebstoffzusammensetzung, mindestens eines tertiären Amins mit der Formel

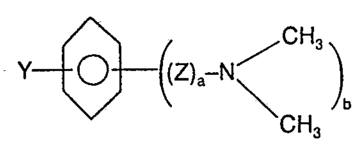

enthält, wobei Z Methylen bedeutet, Y Wasserstoff, Hydroxy, Amino, Halogen, einen Alkylrest mit 1 bis 8 Kohlenstoffatomen oder einen Alkoxyrest mit 1 bis 8 Kohlenstoffatomen im Alkyl-Anteil bedeutet, a = 0 oder 1 und b = 1 oder 2 ist.

3. Klebstoffzusammensetzung nach Anspruch 2, dadurch gekennzeichnet, dass die phosphorhaltige Verbindung die Formel:

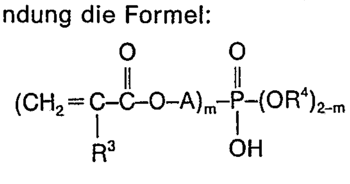

besitzt, wobei $R^3$ Wasserstoff, Halogen, eine Alkylgruppe mit 1 bis 8 Kohlenstoffatomen oder $CH_2=CH-$ bedeutet, $R^4$ Wasserstoff, eine Alkyl-

gruppe mit 1 bis 8 Kohlenstoffatomen oder eine Halogenalkylgruppe mit 1 bis 8 Kohlenstoffatomen bedeutet, A $-R^5O-$ oder $(R^6O)_n$ ist, wobei $R^5$ eine aliphatische oder eine cycloaliphatische Alkengruppe mit 1 bis 9 Kohlenstoffatomen, $R^6$ eine Alkengruppe mit 1 bis 7 Kohlenstoffatomen, n eine ganze Zahl von 2 bis 10 und m 1 oder 2 ist.

4. Bei Zimmertemperatur polymerisierbares Klebstoffsystem, enthaltend:

I. als polymerisierbare Klebstoffzusammensetzung ein Gemisch aus:

A. mindestens einem polymerisierbaren polymeren Material, ausgewählt aus folgender Gruppe:

1. mindestens ein olefinisch ungesättigtes Urethan-Reaktionsprodukt von mindestens einem Vorpolymer mit Isocyanatfunktionen und mindestens einem Monomer mit Hydroxylfunktionen, das mindestens eine polymerisierbare olefinisch ungesättigte Einheit aufweist, wobei das Reaktionsprodukt durch die Anwesenheit von mindestens zwei olefinisch ungesättigten Einheiten und die praktische Abwesenheit von freien Isocyanatgruppen ausgezeichnet ist,

2. mindestens ein elastomeres polymeres Material auf Butadienbasis, ausgewählt aus der Gruppe:

(a) Homopolymere von Butadien,

(b) Copolymere von Butadien und mindestens einem damit copolymerisierbaren Monomer, ausgewählt aus der Gruppe Styrol, Acrylnitril, Methacrylnitril und deren Gemischen,

(c) modifiziertes elastomeres polymeres Material, ausgewählt aus der Gruppe der Homo- und Copolymeren von Butadien, wie vorher definiert, wobei diese Homo- und Copolymere modifiziert wurden durch Copolymerisation von Spurenmengen bis zu 5 Gew.-%, bezogen auf das Gewicht des modifizierten elastomeren polymeren Materials, mindestens eines funktionellen Monomeren, und

(d) deren Mischungen,

3. mindestens ein Polymer-in-Monomer-Sirup, bestehend im wesentlichen aus:

(a) 2 bis 90 Gew.-% mindestens eines polymerisierbaren Additionspolymer,

(b) 10 bis 98 Gew.-% mindestens einer polymerisierbaren olefinisch ungesättigten monomeren Verbindung mit mindestens einer $-\overset{|}{C}=\overset{|}{C}-$ Gruppe, und

(c) 0 bis 30 Gew.-% eines die Gruppe $(CH_2CCl=CHCH_2)_n$ enthaltenden Polymers, wobei n eine ganze Zahl ist, wobei (a) und (b) als ein partielles Polymerisationsprodukt von (b) oder von (b) in Anwesenheit von (c) vorhanden sind, das Gemisch von (a) und (b) oder von (a), (b) und (c) ein Sirup aus in Monomer aufgelöstem oder dispergiertem Polymer ist, in welchem Sirup die Menge des von (b) abgeleiteten (a) im Bereich von 2 bis 90 Gew.-%, bezogen auf das Gesamtgewicht von (a), (b) und (c), liegt,

4. mindestens ein polymerisierbares polymeres Material, ausgewählt aus der Gruppe Polyvinylalkylether, Styrolacrylnitrilharz, ungesättigtes Polyesterharz und deren Gemische, wobei der Alkylanteil des Ethers 1 bis 8 Kohlenstoffatome enthält,

5. mindestens ein polymerisierbares Homopolymer oder Copolymer aus mindestens einem Monomer, ausgewählt aus der Gruppe Styrol und Alkyl- oder Hydroxyalkylester von Acrylsäure oder Methacrylsäure, wobei der Ester von 1 bis 18 Kohlenstoffatome im Alkyl-Anteil besitzt, und

6. Gemische solcher Polymere,

B. mindestens ein polymerisierbares monomeres Material, ausgewählt aus der Gruppe Styrol, Acrylmonomer oder substituiertes Acrylmonomer und deren Gemische, wobei die Menge des Monomeren zusätzlich zu der Menge eines Monomeren in (A) (3) vorhanden ist, sofern die Komponente (A) (3) in der Klebstoffzusammensetzung enthalten ist,

C. mindestens eine phosphorhaltige Verbindung mit mindestens einer olefinisch ungesättigten Gruppe und mindestens einer P-OH-Gruppe,

D. mindestens ein Reduktionsmittel eines bei Zimmertemperatur aktiven Redoxkoppelkatalysatorsystems, und

II. einen Abbindebeschleuniger, der eine Zumischung von mindestens einem Oxidationsmittel eines bei Zimmertemperatur aktiven Redoxkoppelkatalysatorsystems aufweist, wobei das Oxidationsmittel in Verbindung mit dem Reduktionsmittel des Katalysatorsystems unter Bildung von freien Radikalen reaktiv ist, welche zur Initiierung der Polymerisation der polymerisierbaren Klebstoffzusammensetzung wirksam sind, dadurch gekennzeichnet, dass der Abbindebeschleuniger II eine Zumischung von mindestens einer Epoxidverbindung aufweist, und dass die Menge des olefinisch ungesättigten Urethanreaktionsproduktes im Bereich von 10 bis 90 Gew.-%, bezogen auf das Gesamtgewicht der polymerisierbaren Materialien und des Reduktionsmittels, liegt, die Menge des elastomeren polymeren Materials auf Butadienbasis im Bereich von 1 bis 30 Gew.-%, bezogen auf das Gesamtgewicht der polymerisierbaren Materialien und des Reduktionsmittels, liegt, die Menge des Polymer-in-Monomer-Sirups im Bereich von 2 bis 60 Gew.-%, bezogen auf das Gesamtgewicht der polymerisierbaren Materialien und des Reduktionsmittels, liegt, die Menge des Polyvinylalkylethers, Styrolacrylnitrilharzes und ungesättigten Polyesterharzes im Bereich von 5 bis 75 Gew.-%, bezogen auf das Gesamtgewicht der polymerisierbaren Materialien und des Reduktionsmittels, liegt, die Menge des Homopolymeren oder Copolymeren von mindestens einem Monomeren aus der Gruppe Styrol und Estern von Acryl- oder substituierten Acrylsäuren im Bereich von 2 bis 60 Gew.-%, bezogen auf das Gesamtgewicht der polymerisierbaren Materialien und des Reduktionsmittels, liegt, die Menge des Styrols und Acryl- oder substituierten Acrylmonomers im Bereich von 10 bis 90 Gew.-%, bezogen auf das Gesamtgewicht der polymerisierbaren Materialien und des Reduktionsmittels, liegt, die Menge der phosphorhaltigen Verbindung im Bereich von 0,1 bis 20 Gew.-%, bezogen auf das Gesamtgewicht der polymerisierbaren Materialien und des Reduktionsmittels, liegt, die Epoxidverbindung in einer Menge von 1 bis 5 Epoxidäquivalenten je P-OH-Äquivalent vorhanden ist, das Reduktionsmittel in einer Menge von 0,05 bis 10 Gew.-%, bezogen auf das Gesamtgewicht der polymerisierbaren Materialien, vorhanden ist, und die Menge des Oxidationsmittels im Bereich von 0,5 bis 30 Gew.-%, bezogen auf das Gesamtgewicht des Abbindebeschleunigers II, liegt.

5. Klebstoffsystem nach Anspruch 4, dadurch gekennzeichnet, dass die polymerisierbare Klebstoffzusammensetzung I bis zu 10 Gew.-%, bezogen auf das Gesamtgewicht von I und II, mindestens eines tertiären Amins mit der Formel

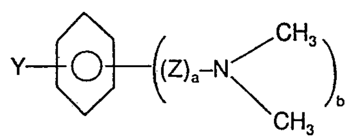

enthält, wobei Z Methylen bedeutet, Y Wasserstoff, Hydroxy, Amino, Halogen, einen Alkylrest mit 1 bis 8 Kohlenstoffatomen oder einen Alkoxyrest mit 1 bis 8 Kohlenstoffatomen im Alkylanteil bedeutet, a = 0 oder 1 und b = 1 oder 2 ist.

6. Klebstoffsystem nach Anspruch 5, dadurch gekennzeichnet, dass die phosphorhaltige Verbindung die Formel

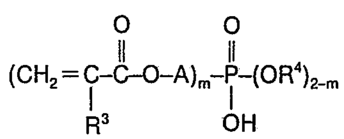

besitzt,

wobei $R^3$ Wasserstoff, Halogen, eine Alkylgruppe mit 1 bis 8 Kohlenstoffatomen oder $CH_2=CH-$ bedeutet, $R^4$ Wasserstoff, eine Alkylgruppe mit 1 bis 8 Kohlenstoffatomen oder eine Halogenalkylgruppe mit 1 bis 8 Kohlenstoffatomen bedeutet, A-$R^5O$ – oder $(R^6O)_n$ ist, wobei $R^5$ eine aliphatische oder cycloaliphatische Alkengruppe mit 1 bis 9 Kohlenstoffatomen, $R^6$ eine Alkengruppe mit 1 bis 7 Kohlenstoffatomen, n eine ganze Zahl von 2 bis 10 und m 1 oder 2 ist.

7. Bei Zimmertemperatur aushärtbares Klebstoffsystem, enthaltend:

I. als polymerisierbare Klebstoffzusammensetzung ein Gemisch aus:

A. mindestens einem polymerisierbaren polymeren Material, ausgewählt aus der Gruppe:

1. mindestens ein olefinisch ungesättigtes Urethanreaktionsprodukt von mindestens einem Vorpolymer mit Isocyanatfunktionen und mindestens einem Monomer mit Hydroxylfunktionen, das mindestens eine polymerisierbare olefinisch ungesättigte Einheit aufweist, wobei das Reaktionsprodukt durch die Anwesenheit von mindestens zwei olefinisch ungesättigten Einheiten und die praktische Abwesenheit von freien Isocyanatgruppen ausgezeichnet ist,

2. mindestens ein elastomeres polymeres Material auf Butadienbasis, ausgewählt aus der Gruppe:

(a) Homopolymere von Butadien,

(b) Copolymere von Butadien und mindestens einem damit copolymerisierbaren Monomeren, ausgewählt aus der Gruppe Styrol, Acrylnitril, Methacrylnitril und deren Gemischen,

(c) modifiziertes elastomeres polymeres Material, ausgewählt aus der Gruppe der Homo- und Copolymeren von Butadien, wie vorher definiert, wobei diese Homo- und Copolymere modifiziert wurden durch Copolymerisation von Spurenmengen bis zu 5 Gew.-%, bezogen auf das Gewicht des modifizierten elastomeren polymeren Materials, mindestens eines funktionellen Monomeren, und

(d) deren Mischungen,

3. mindestens ein Polymer-in-Monomer-Sirup, bestehend im wesentlichen aus:

(a) 2 bis 90 Gew.-% mindestens eines polymerisierbaren Additionspolymers,

(b) 10 bis 98 Gew.-% mindestens einer polymerisierbaren olefinisch ungesättigten monomeren Verbindung mit mindestens einer $-\overset{|}{C}=\overset{|}{C}-$Gruppe, und

(c) 0 bis 30 Gew.-% eines die Gruppe $(CH_2CCl=CHCH_2)_n$ enthaltenden Polymers, wobei n eine ganze Zahl ist, wobei (a) und (b) als ein partielles Polymerisationsprodukt von (b) oder von (b) in Anwesenheit von (c) vorhanden sind, das Gemisch von (a) und (b) oder von (a), (b) und (c) ein Sirup von in Monomer gelöstem oder dispergiertem Polymer ist, in welchem Sirup die Menge des von (b) abgeleiteten (a) im Bereich von 2 bis 90 Gew.-%, bezogen auf das Gesamtgewicht von (a), (b) und (c), liegt,

4. mindestens ein polymerisierbares polymeres Material, ausgewählt aus der Gruppe Polyvinylalkylether, Styrolacrylnitrilharz, ungesättigtes Polyesterharz und deren Gemische, wobei der Alkylanteil des Ethers 1 bis 8 Kohlenstoffatome enthält,

5. mindestens ein polymerisierbares Homopolymer oder Copolymer aus mindestens einem Monomer, ausgewählt aus der Gruppe Styrol und Alkyl- oder Hydroxyalkylester von Acryl- oder Methacrylsäure, wobei der Ester 1 bis 8 Kohlenstoffatome in dem Alkylanteil besitzt, und

6. Gemischen solcher Polymere,

B. mindestens ein polymerisierbares monomeres Material, ausgewählt aus der Gruppe Styrol, Acrylmonomer oder substituiertes Acrylmonomer und deren Gemische, wobei die Menge des Monomeren zusätzlich zu der Menge eines Monomeren in (A) (3) vorhanden ist, sofern die Komponente (A) (3) in der Klebstoffzusammensetzung enthalten ist,

C. mindestens ein Reduktionsmittel eines bei Zimmertemperatur aktiven Redoxkoppelkatalysatorsystems, und

II. einen Abbindebeschleuniger, der eine Zumischung von mindestens einer phosphorhaltigen Verbindung mit mindestens einer olefinisch ungesättigten Gruppe und mindestens einer P-OH-Gruppe und von mindestens einem Oxidationsmittel eines bei Zimmertemperatur aktiven Redoxkoppelkatalysatorsystems, wobei das Oxidationsmittel in Verbindung mit dem Reduktionsmittel des

Katalysatorsystems unter Bildung von freien Radikalen reaktiv ist, welche zur Initiierung der Polymerisation der polymerisierbaren Klebstoffzusammensetzung wirksam sind, dadurch gekennzeichnet, dass die polymerisierbare Klebstoffzusammensetzung I

D. mindestens eine Epoxidverbindung enthält, und dass die Menge des olefinisch ungesättigten Urethanreaktionsproduktes im Bereich von 10 bis 90 Gew.-%, bezogen auf das Gesamtgewicht der polymerisierbaren Materialien und des Reduktionsmittels, liegt, die Menge des elastomeren polymeren Materials auf Butadienbasis im Bereich von 1 bis 30 Gew.-%, bezogen auf das Gesamtgewicht der polymerisierbaren Materialien und des Reduktionsmittels, liegt, die Menge des Polymer-in-Monomer-Sirups im Bereich von 2 bis 60 Gew.-%, bezogen auf das Gesamtgewicht der polymerisierbaren Materialien und des Reduktionsmittels, liegt, die Menge des Polyvinylalkylethers, des Styrolacrylnitrilharzes und des ungesättigten Polyesterharzes im Bereich von 5 bis 75 Gew.-%, bezogen auf das Gesamtgewicht der polymerisierbaren Materialien und des Reduktionsmittels, liegt, die Menge des Homopolymeren oder Copolymeren von mindestens einem Monomeren aus der Gruppe Styrol und den Estern von Acryl- oder substituierten Acrylsäuren im Bereich von 2 bis 60 Gew.-%, bezogen auf das Gesamtgewicht der polymerisierbaren Materialien und des Reduktionsmittels, liegt, die Menge des Styrols und des Acrylmonomers oder substituierten Acrylmonomers im Bereich von 10 bis 90 Gew.-%, bezogen auf das Gesamtgewicht der polymerisierbaren Materialien und des Reduktionsmittels, liegt, die Menge der phosphorhaltigen Verbindung im Bereich von 0,1 bis 20 Gew.-%, bezogen auf das Gesamtgewicht der polymerisierbaren Materialien und des Reduktionsmittels, liegt, die Epoxidverbindung in einer Menge von 1 bis 5 Epoxidäquivalenten pro P-OH-Äquivalent vorhanden ist, das Reduktionsmittel in einer Menge von 0,05 bis 10 Gew.-%, bezogen auf das Gesamtgewicht der polymerisierbaren Materialien, vorhanden ist, und die Menge des Oxidationsmittels im Bereich von 0,5 bis 30 Gew.-%, bezogen auf das Gesamtgewicht des Abbindebeschleunigers II, liegt.

8. Klebstoffsystem nach Anspruch 7, dadurch gekennzeichnet, dass die phosphorhaltige Verbindung die Formel

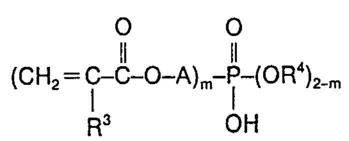

besitzt,

wobei $R^3$ Wasserstoff, Halogen, eine Alkylgruppe mit 1 bis 8 Kohlenstoffatomen oder $CH_2=CH-$ bedeutet, $R^4$ Wasserstoff, eine Alkylgruppe mit 1 bis 8 Kohlenstoffatomen oder eine Halogenalkylgruppe mit 1 bis 8 Kohlenstoffatomen bedeutet, A-$R^5$O- oder $(R^6O)_n$ bedeutet, wobei $R^5$ eine aliphatische oder cycloaliphatische Alkengruppe mit 1 bis 9 Kohlenstoffatomen, $R^6$ eine Alkengruppe mit 1 bis 7 Kohlenstoffatomen, n eine ganze Zahl von 2 bis 10 und m 1 oder 2 ist.

**Claims**

1. Adhesive composition comprising

A. at least one polymerizable polymeric material selected from the following group:

(1) at least one olefinically unsaturated urethane reaction product of at least one prepolymer with isocyanate functions and at least one monomer with hydroxyl functions which has at least one polymerizable, olefinically unsaturated unit, with the reaction product being characterized by the presence of at least two olefinically unsaturated units and the substantial absence of free isocyanate groups;

(2) at least one butadiene-based elastomeric polymeric material selected from the group:

(a) homopolymers of butadiene;

(b) copolymers of butadiene and at least one monomer copolymerizable therewith selected from the group consisting of styrene, acrylonitrile, methacrylonitrile and mixtures thereof;

(c) modified elastomeric material selected from the group consisting of homopolymers and copolymers of butadiene as previously described, with these homopolymers and copolymers having been modified by copolymerization therein of trace amounts of up to 5 percent by weight, based on the weight of modified elastomeric material, of at least one functional monomer; and

(d) mixtures thereof;

(3) at least one polymer-in-monomer syrup consisting essentially of:

(a) from 2 to 90 percent by weight of at least one polymerizable addition polymer; and

(b) from 10 to 98 percent by weight of at least one polymerizable olefinically unsaturated monomeric compound having at least one $-\overset{|}{C}=\overset{|}{C}-$ group; and

(c) from 0 to 30 percent by weight of a polymer containing the group $(CH_2CCl=CHCH_2)_n$, wherein n is an integer;

wherein (a) and (b) are present as a partial polymerization product of (b) or of (b) in the presence of (c); the mixture of (a) and (b), or of (a), (b) and (c), is a syrup of polymer dissolved or dispersed in unpolymerized monomer, in which syrup the amount of (a) derived from (b) is in the range from 2 to 90 percent by weight, based on the total weight of (a), (b) and (c);

(4) at least one polymerizable polymeric material selected from the group consisting of polyvinylalkyl ether, styrene-acrylonitrile resin, unsaturated polyester resin and mixtures thereof, the alkyl moiety of the polyvinyl alkyl ether containing from 1 to 8 carbon atoms;

(5) at least one homopolymer or copolymer of at least one monomer selected from the group consisting of styrene and alkyl or hydroxy alkyl esters of acrylic or methacrylic acid, said ester having from 1 to 18 carbon atoms in the alkyl moiety;

(6) mixtures of such polymers;

B. at least one polymeric material selected from the group: styrene, acrylic or substituted acrylic monomer and mixtures thereof, with the amount of such polymerizable monomer being in addition to any such monomer present in (a) (3);

C. at least one phosphorus-containing compound having at least one olefinically unsaturated group and at least one P–OH group;

D. a redox couple catalyst system active at room temperature, characterized in that the adhesive composition contains

E. at least one epoxy compound which is present in an amount of 1 to 5 epoxide equivalents per equivalent of P–OH.

2. An adhesive composition according to claim 1 containing up to 10 percent by weight, based on total weight of said adhesive composition of at least one tertiary amine having the formula

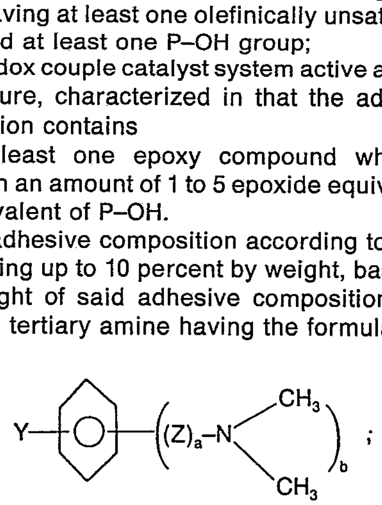

wherein Z signifies methylene, Y signifies hydrogen, hydroxy, amino, halogen, an alkyl radical having from 1 to 8 carbon atoms, or an alkoxy radical with from 1 to 8 carbon atoms in the alkyl moiety; and a is zero or 1; and b is 1 or 2.

3. An adhesive composition according to claim 2 wherein the phosphorus-containing compound has the formula

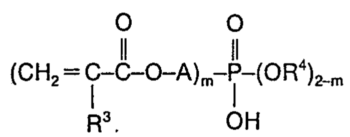

wherein $R^3$ signifies hydrogen, halogen, an alkyl group having from 1 to 8 carbon atoms, or $CH_2=CH-$; $R^4$ signifies hydrogen, an alkyl group having from 1 to 8 carbon atoms, or a haloalkyl group having from 1 to 8 carbon atoms; A is $-R^5O-$ or $(R^6O)_n$, wherein $R^5$ is an aliphatic or cycloaliphatic alkylene group containing from 1 to 9 carbon atoms, $R^6$ is an alkylene group having from 1 to 7 carbon atoms, n is an integer from 2 to 10, and m is 1 or 2.

4. An adhesive composition polymerizable at room temperature containing:

I. as a polymerizable adhesive composition, a mixture comprising

A. at least one polymerizable polymeric material selected from the following group:

1. at least one olefinically unsaturated urethane reaction product of at least one prepolymer with isocyanate functions and at least one monomer with hydroxy functions which has at least one polymerizable olefinically unsaturated unit, with the reaction product being characterized by the presence of at least two olefinically unsaturated units and the practical absence of free isocyanate groups;

2. at least one butadiene-based elastomeric polymeric material selected from the group:

(a) homopolymers of butadiene;

(b) copolymers of butadiene and at least one monomer copolymerizable therewith selected from the group styrene, acrylonitrile, methacrylonitrile and mixtures thereof;

(c) modified elastomeric polymeric material selected from the group consisting of homopolymers and copolymers of butadiene as previously defined, with these homopolymers and copolymers having been modified by copolymerization therein of trace amounts up to 5 percent by weight, based on weight of the modified elastomeric polymeric material, of at least one functional monomer; and

(d) mixtures thereof;

3. at least one polymer-in-monomer syrup consisting essentially of

(a) from 2 to 90 percent by weight of at least one polymerizable addition polymer;

(b) from 10 to 98 percent by weight of at least one polymerizable olefinically unsaturated monomeric compound having at least one $-\overset{|}{C}=\overset{|}{C}-$ group; and

(c) from 0 to 30 percent by weight of a polymer containing the group $(CH_2CCl=CHCH_2)_n$, wherein n is an integer

wherein (a) and (b) are present as a partial polymerization product of (b) of of (b) in the presence of (c); the mixture of (a) and (b) or of (a), (b) and (c) is a syrup of polymer dissolved or dispersed in monomer, in which syrup the amount of (a) derived from (b) is in the range from 2 to 90 percent by weight, based on the total weight of (a), (b) and (c);

4. at least one polymerizable polymeric material selected from the group consisting of polyvinyl alkyl ether, styrene-acrylonitrile resin, unsaturated polyester resin and mixtures thereof, with the alkyl moiety of the ether containing from 1 to 8 carbon atoms;

5. at least one polymerizable homopolymer or copolymer of at least one monomer selected from the group consisting of styrene and alkyl or hydroxyalkyl esters of acrylic or methacrylic acid, with the ester having from 1 to 18 carbon atoms in the alkyl moiety; and

6. mixtures of such polymers;

B. at least one polymerizable monomeric material selected from the group consisting of styrene, acrylic or substituted acrylic monomer, and mixtures thereof, the amount of such monomer being in addition to the amount of a monomer present in (A) (3), providing the component (A) (3) is contained in the adhesive composition;

C. at least one phosphorus-containing compound having at least one olefinically unsaturated group and at least one P–OH group;

D. at least one reducing agent of a redox couple catalyst system active at room temperature; and

II. a bonding accelerator comprising an admixture of at least one oxidizing agent of a redox couple catalyst system active at room temperature, with the oxidizing agent being reactive in combination with the reducing agent of said catalyst system to produce free radicals which are effective to initiate polymerization of said polymerizable adhesive composition; characterized in that the bonding accelerator II contains an admixture of at least one epoxy compound and in that the amount of the olefinically unsaturated urethane reaction product lies in the range from 10 to 90 percent by weight, based on the total weight of the polymerizable materials and the reducing agent; the amount of the butadiene-based elastomeric polymeric material lies in the range from 1 to 30 percent by weight, based on the total weight of the polymerizable materials and the reducing agent; the amount of such polymer-in-monomer syrup lies in the range from 2 to 60 percent by weight, based on the total weight of the polymerizable materials and the reducing agent; the amount of said polyvinyl alkyl ether, styrene-acrylonitrile resin and unsaturated polyester resin lies in the range from 5 to 75 percent by weight, based on the total weight of the polymerizable materials and the reducing agent; the amount of said homopolymer or copolymer of at least one monomer of the group styrene and esters of acrylic or substituted acrylic acids lies in the range from 2 to 60 percent by weight, based on the total weight of the polymerizable materials and the reducing agent; the amount of the styrene and acrylic or substituted acrylic monomer lies in the range from 10 to 90 percent by weight, based on the total weight of the polymerizable materials and the reducing agent; the amount of said phosphorus-containing compound lies in the range from 0.1 to 20 percent by weight, based on the total weight of the polymerizable materials and the reducing agent; the epoxy compound is present in an amount of 1 to 5 epoxide equivalents per equivalent of P–OH; the reducing agent is present in an amount of 0.05 to 10 percent by weight, based on the total weight of the polymerizable materials; and the amount of the oxidizing agent lies in the range from 0.5 to 30 percent by weight, based on the total weight of the bonding accelerator II.

5. An adhesive composition according to claim 4 characterised in that said polymerizable adhesive composition I contains up to 10 percent by weight, based on the total weight of I and II, of at least one tertiary amine having the formula

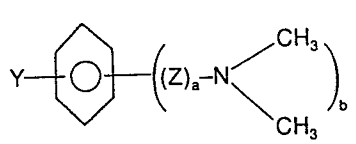

wherein Z signifies methylene, Y signifies hydrogen, hydroxy, amino, halogen, an alkyl radical having from 1 to 8 carbon atoms, or an alkoxy radical with from 1 to 8 carbon atoms in the alkyl moiety; a is zero or 1; and b is 1 or 2.

6. An adhesive composition according to claim 5 wherein said phosphorus-containing compound has the formula

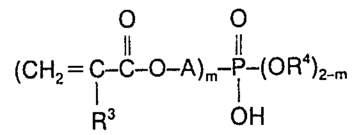

wherein $R^3$ signifies hydrogen, halogen, an alkyl group having from 1 to 8 carbon atoms, or $CH_2{=}CH-$; $R^4$ signifies hydrogen, an alkyl group having from 1 to 8 carbon atoms, or a haloalkyl group having from 1 to 8 carbon atoms; A is $-R^5O-$ or $(R^6O)_n$, wherein $R^5$ is an aliphatic or cycloaliphatic alkylene group containing from 1 to 9 carbon atoms, $R^6$ is an alkylene group having from 1 to 7 carbon atoms, n is an integer from 2 to 10, and m is 1 or 2.

7. An adhesive system curable at room temperature containing:

I. as a polymerizable adhesive composition, a mixture comprising

A. at least one polymerizable polymeric material selected from the group:

1. at least one olefinically unsaturated urethane reaction product of at least one prepolymer with isocyanate functions and at least one monomer with hydroxy functions which has at least one polymerizable olefinically unsaturated unit, with the reaction product being characterized by the presence of at least two olefinically unsaturated units and the practical absence of free isocyanate groups:

2. at least one butadiene-based elastomeric polymeric material selected from the group:

(a) homopolymers of butadiene:

(b) copolymers of butadiene and at least one monomer copolymerizable therewith selected from the group styrene, acrylonitrile, methacrylonitrile and mixtures thereof;

(c) modified elastomeric polymeric material selected from the group consisting of homopolymers and copolymers of butadiene as previously defined, with the homopolymers and copolymers having been modified by copolymerization therein of trace amounts up to 5 percent by weight, based on weight of modified elastomeric polymeric material, of at least one functional monomer; and

(d) mixtures thereof;

3. at least one polymer-in-monomer syrup consisting essentially of

(a) from 2 to 90 percent by weight of at least one polymerizable addition polymer;

(b) from 10 to 98 percent by weight of at least one polymerizable olefinically unsaturated monomeric compound having at least one $-\overset{|}{C}=\overset{|}{C}-$ group; and

(c) from 0 to 30 percent by weight of a polymer containing the group $(CH_2CCL{=}CHCH_2)_n$, wherein n is an integer

wherein (a) and (b) are present as a partial polymerization product of (b) or of (b) in the presence of (c); the mixture of (a) and (b) or of (a), (b) and (c) is a syrup of polymer dissolved or dispersed in monomer, in which syrup the amount

of (a) derived from (b) lies in the range from 2 to 90 percent by weight, based on the total weight of (a), (b) and (c);

4. at least one polymerizable polymeric material selected from the group consisting of polyvinyl alkyl ether, styrene-acrylonitrile resin, unsaturated polyester resin and mixtures thereof, with the alkyl moiety of the ether containing from 1 to 8 carbon atoms;

5. at least one polymerizable homopolymer or copolymer of at least one monomer selected from the group consisting of styrene and alkyl or hydroxyalkyl esters of acrylic or methacrylic acid, with the ester having from 1 to 18 carbon atoms in the alkyl moiety; and

6. mixtures of such polymers;

B. at least one polymerizable monomeric material selected from the group consisting of styrene, acrylic or substituted acrylic monomer, and mixtures thereof, the amount of such monomer being in addition to the amount of any such monomer in (A) (3), providing the component (A) (3) is contained in the adhesive composition,

C. at least one reducing agent of a redox couple catalyst system active at room temperature; and

II. a bonding accelerator comprising an admixture of at least one phosphorus-containing compound having at least one olefinically unsaturated group and at least one P–OH group and at least one oxidizing agent of a redox couple catalyst system active at room temperature, said oxidizing agent being reactive in combination with the reducing agent of said catalyst system to produce free radicals effective to initiate polymerization of said polymerizable adhesive composition; characterized in that the polymerizable adhesive composition I contains.

D. at least one epoxy compound and in that the amount of such olefinically unsaturated urethane reaction product lies in the range from 10 to 90 percent by weight, based on the total weight of the polymerizable materials and the reducing agent; the amount of the butadiene-based elastomeric polymeric material lies in the range from 1 to 30 percent by weight, based on the total weight of the polymerizable materials and the reducing agent; the amount of the polymer-in-monomer syrup lies in the range from 2 to 60 percent by weight, based on the total weight of the polymerizable materials and the reducing agent; the amount of the polyvinyl alkyl ether, styrene-acrylonitrile resin and unsaturated polyester resin lies in the range from 5 to 75 percent by weight, based on the total weight of the polymerizable materials and the reducing agent; the amount of the homopolymer or copolymer of at least one monomer of the group of styrene and esters of acrylic or substituted acrylic acids lies in the range from 2 to 60 percent by weight, based on the total weight of polymerizable materials and the reducing agent; the amount of the styrene and acrylic or substituted acrylic monomers lies in the range from 10 to 90 percent by weight, based on the total weight of the polymerizable materials and the reducing agent; the amount of said phosphorus-containing compound lies in the range from 0.1 to 20 percent by weight, based on the total weight of polymerizable materials and the reducing agent; the epoxy compound is present in an amount of 1 to 5 epoxide equivalents per equivalent of P–OH; said reducing agent is present in an amount of 0.05 to 10 percent by weight, based on the total weight of the polymerizable materials; and the amount of the oxidizing agent lies in the range from 0.5 to 30 percent by weight, based on the total weight of the bonding accelerator II.

8. An adhesive composition according to claim 7 wherein said phosphorus-containing compound has the formula

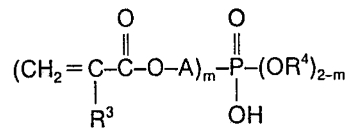

wherein $R^3$ signifies hydrogen, halogen, an alkyl group having from 1 to 8 carbon atoms, or $CH_2{=}C$–; $R^4$ signifies hydrogen, an alkyl group having from 1 to 8 carbon atoms, or a haloalkyl group having from 1 to 8 carbon atoms; A is of $-R^5O-$ or $(R^6O)_n$, wherein $R^5$ is an aliphatic or cycloaliphatic alkylene group containing from 1 to 9 carbon atoms, $R^6$ is an alkylene group having from 1 to 7 carbon atoms, n is an integer from 2 to 10, and m is 1 or 2.

**Revendications**

1. Composition adhésive qui contient les constituants suivants:

A. au moins une matière polymère polymérisable, choisie dans le groupe suivant:

(1) au moins un produit de réaction uréthane oléfiniquement insaturé d'au moins un prépolymère à fonctions isocyanate et d'au moins un monomère à fonctions hydroxyle, qui présente au moins une unité oléfiniquement insaturée polymérisable, le produit de réaction se distinguant par la présence d'au moins deux unités oléfiniquement insaturées et par l'absence pratique de groupes isocyanate libres,

(2) au moins une matière polymère élastomère à base de butadiène, choisie dans le groupe:

(a) homopolymères de butadiène,

(b) copolymères de butadiène et d'au moins un monomère copolymérisable avec lui, choisi dans le groupe styrène, acrylonitrile, méthacrylonitrile et leurs mélanges,

(c) matière élastomère modifiée, choisie dans le groupe des homo- et copolymères du butadiène tels que décrits plus haut, ces homo- et copolymères ayant été modifiés par copolymérisation de quantités en traces jusqu'à 5% en poids, par rapport au poids de la matière élastomère modifiée, d'au moins un monomère fonctionnel, et

(d) leurs mélanges,

(3) au moins un sirop de polymère-dans-monomère, consistant essentiellement en

(a) 2 à 90% en poids d'au moins un polymère d'addition polymérisable,

(b) 10 à 98% en poids d'au moins un composé monomère oléfiniquement insaturé polymérisable comportant au moins un groupe $-\overset{|}{C}=\overset{|}{C}-$ et
(c) 0 à 30% en poids d'un polymère contenant le groupe $(CH_2CCl=CHCH_2)_n$ où n est un nombre entier,
(a) et (b) étant présents sous forme de produit de polymérisation partiel de (b), ou de (b) en présence de (c), le mélange de (a) et de (b) ou de (a), de (b) et de (c) étant un sirop de polymère dissous ou dispersé dans du monomère non polymérisé, sirop dans lequel la quantité de (a) dérivé de (b) se situe dans l'intervalle de 2 à 90% en poids par rapport au poids total de (a), (b) et (c),

(4) au moins une matière polymère polymérisable choisie dans le groupe polyvinylalcoyl-éther, résine styrène-acrylonitrile, résine polyester insaturée et leurs mélanges, la portion alcoyle du polyvinylalcoyl-éther contenant 1 à 8 atomes de carbone,

(5) au moins un homopolymère ou copolymère d'au moins un monomère choisi dans le groupe du styrène et des esters alcoylés ou hydroxyalcoylés de l'acide acrylique ou de l'acide méthacrylique, l'ester possédant 1 à 18 atomes de carbone dans la portion alcoyle, et

(6) des mélanges de ces polymères,

B. au moins une matière polymérisable choisie dans le groupe du styrène, d'un monomère acrylique ou d'un monomère acrylique substitué et de leurs mélanges, la quantité du monomère polymérisable étant présente en plus du monomère présent dans (A) (3), au cas où le composant (A) (3) est contenu dans la composition adhésive,

C. au moins un composé renfermant du phosphore avec au moins un groupe oléfiniquement insaturé et au moins un groupe P–OH,

D. un système catalyseur couplé redox actif à la température ambiante, caractérisée en ce que la composition adhésive contient

E. au moins un composé époxy qui se présente en une quantité de 1 à 5 équivalents époxy par équivalent P–OH.

2. Composition adhésive selon la revendication 1, caractérisée en ce qu'elle contient jusqu'à 10% en poids, par rapport au poids total de la composition adhésive, d'au moins une amine tertiaire de formule:

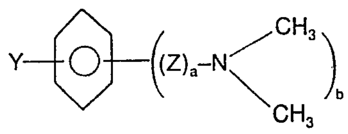

dans laquelle Z signifie méthylène, Y de l'hydrogène, hydroxy, amino, halogène, un radical alcoyle ayant 1 à 8 atomes de carbone ou un radical alcoxy ayant 1 à 8 atomes de carbone dans la portion alcoyle, a = 0 ou 1 et b = 1 ou 2.

3. Composition adhésive selon la revendication 2, caractérisée en ce que le composé renfermant du phosphore possède la formule:

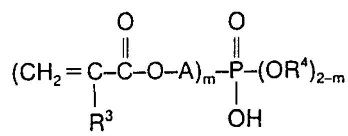

dans laquelle $R^3$ signifie de l'hydrogène, halogène, un groupe alcoyle ayant 1 à 8 atomes de carbone ou $CH_2=CH-$, $R^4$ signifie de l'hydrogène, un groupe alcoyle ayant 1 à 8 atomes de carbone ou un groupe halogénoalcoyle ayant 1 à 8 atomes de carbone, A est $-R^5O-$ ou $(R^6O)_n$, $R^5$ étant un groupe alcoylène aliphatique ou cycloaliphatique ayant 1 à 9 atomes de carbone, $R^6$ un groupe alcoylène ayant 1 à 7 atomes de carbone, n un nombre entier de 2 à 10 et m 1 ou 2.

4. Système adhésif polymérisable à la température ambiante, contenant:

I. en tant que composition adhésive polymérisable un mélange de:

A. au moins une matière polymère polymérisable choisie dans le groupe suivant:

1. au moins un produit de réaction uréthane oléfiniquement insaturé d'au moins un prépolymère à fonctions isocyanate et d'au moins un monomère à fonctions hydroxyle, qui présente au moins une unité oléfiniquement insaturée polymérisable, le produit de réaction étant caractérisé par la présence d'au moins deux unités oléfiniquement insaturées et par l'absence pratique de groupes isocyanate libres,

2. au moins une matière polymère élastomère à base de butadiène, choisie dans le groupe:
(a) homopolymères de butadiène,
(b) copolymères de butadiène et d'au moins un monomère copolymérisable avec lui, choisi dans le groupe styrène, acrylonitrile, méthacrylonitrile et leurs mélanges,
(c) une matière polymère élastomère modifiée, choisie dans le groupe des homo- et copolymères de butadiène tels que définis plus haut, ces homo- et copolymères ayant été modifiés par copolymérisation de quantités en traces jusqu'à 5% en poids, par rapport au poids de la matière polymère élastomère modifiée, d'au moins un monomère fonctionnel, et
(d) leurs mélanges,

3. au moins un sirop polymère-dans-monomère, consistant essentiellement en:
(a) 2 à 90% en poids d'au moins un polymère d'addition polymérisable,
(b) 10 à 98% en poids d'au moins un composé monomère oléfiniquement insaturè polymérisable avec au moins un groupe $-\overset{|}{C}=\overset{|}{C}-$, et
(c) 0 à 30% en poids d'un polymère contenant le groupe $(CH_2CCLI=CHCH_2)_n$ où n est un nombre entier, (a) et (b) étant présents en tant que produit de polymérisation partiel de (b), ou de (b) en présence de (c), le mélange de (a) et de (b) ou de (a), de (b) et de (c) étant un sirop de polymère dissous ou dispersé dans du monomère, sirop dans lequel la quantité de (a) dérivée de (b) se situe dans l'intervalle de 2 à 90% en poids par rapport au poids total de (a), (b) et (c),

4. au moins une matière polymère polymérisable, choisie dans le groupe polyvinylalcoyl-éther, résine styrène-acrylonitrile, résine polyester non saturée et leurs mélanges, la portion alcoyle de l'éther contenant 1 à 8 atomes de carbone,

5. au moins un homopolymère ou copolymère polymérisable d'au moins un monomère choisi dans le groupe du styrène et d'esters alcoylés ou hydroxyalcoylés d'acide acrylique ou d'acide méthacrylique, l'ester possédant 1 à 18 atomes de carbone dans la portion alcoyle, et

6. des mélanges de ces polymères,

B. au moins une matière monomère polymérisable choisie dans le groupe styrène, monomère acrylique ou monomère acrylique substitué et leurs mélanges, la quantité du monomère étant présente en plus de la quantité d'un monomère dans (A) (3), pour autant que le composant (A) (3) soit contenu dans la composition adhésive,

C. au moins un composé renfermant du phosphore avec au moins un groupe oléfiniquement insaturé et au moins un groupe P–OH,

D. au moins un agent réducteur d'un système catalyseur couplé redox actif à la température ambiante, et

II. un accélérateur de prise constitué par l'adjonction d'au moins un agent oxydant d'un système catalyseur couplé redox, actif à la température ambiante, l'agent oxydant étant réactif en association avec l'agent réducteur du système catalytique avec formation de radicaux libres qui sont en mesure d'initier la polymérisation de la composition adhésive polymérisable, caractérisé en ce que l'accélérateur de prise II présente une adjonction d'au moins un composé époxy et en ce que la quantité du produit de réaction uréthane oléfiniquement insaturé se situe dans l'intervalle de 10 à 90% en poids, par rapport au poids total des matières polymérisables et de l'agent réducteur, en ce que la quantité de la matière polymère élastomère à base de butadiène se situe dans l'intervalle de 1 à 30% en poids par rapport au poids total des matières polymérisables et de l'agent réducteur, en ce que la quantité du sirop polymère-dans-monomère se situe dans l'intervalle de 2 à 60% en poids par rapport au poids total des matières polymérisables et de l'agent réducteur, en ce que la quantité du polyvinylalcoyl-éther, de la résine styrène-acrylonitrile et de la résine polyester insaturée se situe dans l'intervalle de 5 à 75% en poids par rapport au poids total des matières polymérisables et de l'agent réducteur, en ce que la quantité de l'homopolymère ou du copolymère d'au moins un monomère du groupe du styrène et des esters d'acides acryliques ou acryliques substitués se situe dans l'intervalle de 2 à 60% en poids par rapport au poids total des matières polymérisables et de l'agent réducteur, en ce que la quantité du styrène et des monomères acryliques ou acryliques substitués se situe dans l'intervalle de 10 à 90% en poids par rapport au poids total des matières polymérisables et de l'agent réducteur, en ce que la quantité du composé renfermant du phosphore se situe dans l'intervalle de 0,1 à 20% en poids par rapport au poids total des matières polymérisables et de l'agent réducteur, le composé époxy étant présent en une quantité de 1 à 5 équivalents époxy par équivalent P–OH, l'agent réducteur étant présent en une quantité de 0,05 à 10% en poids par rapport au poids total des matières polymérisables et la quantité de l'agent oxydant se situant dans l'intervalle de 0,5 à 30% en poids par rapport au poids total de l'accélérateur de prise II.

5. Système adhésif selon la revendication 4, caractérisé en ce que la composition adhésive polymérisable contient 1 à 10% en poids, par rapport au poids total de I et de II, d'au moins une amine tertiaire de formule:

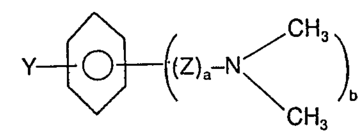

Z signifiant méthylène, Y de l'hydrogène, hydroxy, amino, halogène, un radical alcoyle ayant 1 à 8 atomes de carbone ou un radical alcoxy ayant 1 à 8 atomes de carbone dans la portion alcoyle, a = 0 ou 1 et b = 1 ou 2.

6. Système adhésif selon la revendication 5, caractérisé en ce que le composé renfermant du phosphore possède la formule:

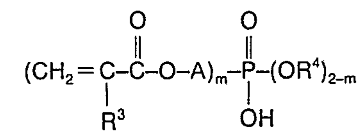

$R^3$ signifiant de l'hydrogène, halogène, un groupe alcoyle ayant 1 à 8 atomes de carbone ou $CH_2=CH-$, $R^4$ de l'hydrogène, un groupe alcoyle ayant 1 à 8 atomes de carbone ou un groupe halogénoalcoyle ayant 1 à 8 atomes de carbone, A étant $-R^5O-$ ou $(R^6O)_n$, $R^5$ étant un groupe alcoylène aliphatique ou cycloaliphatique ayant 1 à 9 atomes de carbone, $R^6$ un groupe alcoylène ayant 1 à 7 atomes de carbone, n étant un nombre entier de 2 à 10 et m étant 1 ou 2.

7. Système adhésif durcissable à la température ambiante, contenant:

I. comme composition adhésive polymérisable un mélange de:

A. au moins une matière polymère polymérisable choisie dans le groupe:

1. au moins un produit de réaction uréthane oléfiniquement insaturé d'au moins un prépolymère à fonctions isocyanate et d'au moins un monomère à fonctions hydroxyle, qui présente au moins une unité oléfiniquement insaturée polymérisable, le produit de réaction étant caractérisé par la présence d'au moins deux unités oléfiniquement insaturées et par l'absence pratique de groupes isocyanate libres,

2. au moins une matière polymère élastomère à base de butadiène, choisie dans le groupe

(a) homopolymères de butadiène,

(b) copolymères de butadiène et d'au moins un monomère copolymérisable avec lui, lequel est

choisi dans le groupe styrène, acrylonitrile, méthacrylonitrile et leurs mélanges,

(c) une matière polymère élastomère modifiée choisie dans le groupe des homo- et copolymères de butadiène tels que définis plus haut, ces homo- et copolymères ayant été modifiés par copolymérisation avec des quantités en traces jusqu'à 5% en poids, par rapport au poids de la matière polymère élastomère modifiée, d'au moins un monomère fonctionnel, et

(d) leurs mélanges,

3. au moins un sirop polymère-dans-monomère, consistant essentiellement en

(a) 2 à 90% en poids d'au moins un polymère d'addition polymérisable,

(b) 10 à 98% en poids d'au moins un composé monomère oléfiniquement insaturé polymérisable ayant au moins un groupe $-\overset{|}{C}=\overset{|}{C}-$, et

(c) 0 à 30% en poids d'un polymère contenant le groupe $(CH_2CCl=CHCH_2)_n$, n étant un nombre entier, en l'occurence (a) et (b) étant présents en tant que produit de polymérisation partiel de (b), ou de (b) en présence de (c), le mélange de (a) et de (b), ou de (a), (b) et (c), étant un sirop d'un polymère dissous ou dispersé dans du monomère, sirop dans lequel la quantité du (a) dérivé de (b) se situe dans l'intervalle de 2 à 90% en poids, par rapport au poids total de (a), (b) et (c),

4. au moins une matière polymère polymérisable, choisie dans le groupe polyvinylalcoyl-éther, résine de styrène-acrylonitrile, résine polyester insaturée et leurs mélanges, la portion alcoyle dans l'éther contenant 1 à 8 atomes de carbone,

5. au moins un homopolymère ou copolymère polymérisable d'au moins un monomère choisi dans le groupe styrène et esters alcoylés ou hydroxyalcoylés d'acide acrylique ou méthacrylique, l'ester possédant 1 à 8 atomes de carbone dans la portion alcoyle, et

6. des mélanges de ces polymères,

B. au moins une matière monomère polymérisable, choisie dans le groupe styrène, monomère acrylique ou monomère acrylique substitué et leurs mélanges, la quantité du monomère étant présente en plus de la quantité d'un monomère dans (A) (3), au cas où le composant (A) (3) est contenu dans la composition adhésive,

C. au moins un agent réducteur d'un système catalyseur couplé redox actif à la température ambiante, et

II. un accélérateur de prise qui comporte un mélange d'au moins un composé renfermant du phosphore ayant au moins un groupe oléfiniquement insaturé et au moins un groupe P–OH, et d'au moins un agent oxydant d'un système catalyseur couplé redox, actif à la température ambiante, l'agent oxydant, en association avec l'agent réducteur du système catalyseur, étant réactif avec formation de radicaux libres lesquels sont en mesure d'initier la polymérisation de la composition adhésive polymérisable, caractérisé en ce que la composition adhésive I polymérisable contient

D. au moins un composé époxy, et en ce que la quantité du produit de réaction uréthane oléfiniquement insaturé se situe dans l'intervalle de 10 à 90% en poids par rapport au poids total des matières polymérisables et de l'agent réducteur, en ce que la quantité de la matière polymère élastomère à base de butadiène se situe dans l'intervalle de 1 à 30% en poids par rapport au poids total des matières polymérisables et de l'agent réducteur, en ce que la quantité du sirop polymère-dans-monomère se situe dans l'intervalle de 2 à 60% en poids par rapport au poids total des matières polymérisables et de l'agent réducteur, en ce que la quantité du polyvinylalcoyl-éther, de la résine styrène-acrylonitrile et de la résine polyester insaturée se situe dans l'intervalle de 5 à 75% en poids par rapport au poids total des matières polymérisables et de l'agent réducteur, en ce que la quantité de l'homopolymère ou copolymère d'au moins un monomère du groupe du styrène et des esters d'acides acryliques ou acryliques substitués se situe dans l'intervalle de 2 à 60% en poids par rapport au poids total des matières polymérisables et de l'agent réducteur, en ce que la quantité de styréne et du monomère acrylique ou du monomère acrylique substitué se situe dans l'intervalle de 10 à 90% en poids par rapport au poids total des matières polymérisables et de l'agent réducteur, en ce que la quantité du composé renfermant du phosphore se situe dans l'intervalle de 0,1 à 20% en poids par rapport au poids total des matières polymérisables et de l'agent réducteur, le composé époxy étant présent en une quantité de 1 à 5 équivalents époxy par équivalent P–OH, l'agent réducteur étant présent en une quantité de 0,05 à 10% en poids par rapport au poids total des matières polymérisables, tandis que la quantité d'agent oxydant se situe dans l'intervalle de 0,5 à 30% en poids par rapport au poids total de l'accélérateur de prise II.

8. Système adhésif selon la revendication 7, caractérisé en ce que le composé renfermant du phosphore possède la formule:

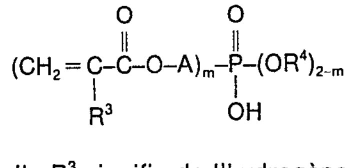

dans laquelle $R^3$ signifie de l'hydrogène, de l'halogène, un groupe alcoyle ayant 1 à 8 atomes de carbone ou $CH_2=CH-$, $R^4$ signifie de l'hydrogène, un groupe alcoyle ayant 1 à 8 atomes de carbone, A signifie $-R^5O-$ ou $(R^6O)_n$, $R^5$ étant un groupe alcoylène aliphatique ou cycloaliphatique ayant 1 à 9 atomes de carbone, $R^6$ un groupe alcoyléne ayant 1 à 7 atomes de carbone, n étant un nombre entier de 2 à 10 et m étant 1 ou 2.